# EUROPEAN PATENT APPLICATION

(11) **EP 4 596 600 A1**
(43) Date of publication of application: **06.08.2025**
(21) Application number: 25152838.6
(22) Date of filing: 20.01.2025
(51) Int. Cl.: C08G 59/22, C08G 59/24, C08G 59/42, C08G 59/68, C08G 65/18, C09J 163/00, G02B 6/30, G02B 6/38, G02B 6/42

(54) **RESIN COMPOSITION**

(30) Priority: 01.02.2024 JP 2024013963
(71) Applicant: AJINOMOTO CO., INC., Chuo-ku Tokyo 104-8315 (JP)
(72) Inventor: KASUMI, Kenichi, Kanagawa, 210-8681 (JP)
(74) Representative: Mewburn Ellis LLP

(57) **Abstract**

In order to provide a resin composition that has a high viscosity and that is capable of adhering between an optical fiber and a groove of a silicon chip with a small exposure amount, the resin composition comprises (A) a liquid aliphatic oxetane resin, (B) a solid aliphatic epoxy resin ,(C) a liquid aliphatic epoxy resin, and (D) a photocationic polymerization initiator. The resin composition contains or does not contain (E) an inorganic particle. An amount of (E) the inorganic particle is 150 by mass or less relative to total 100% by mass of the resin composition.

## Description

### TECHNICAL FIELD

The present invention relates to a resin composition. Specifically, the present invention relates to: a resin composition for adhering an optical fiber to a groove of a silicon chip to which a silicon photonics is applied; and a device that uses the resin composition and a method for producing the device.

### BACKGROUND ART

A conventional optical semiconductor device having an optical component mounted on a mounting substrate has been produced occasionally by adhering the optical component onto the mounting substrate by using an adhesive. In Patent Literature 1, a photo-curable adhesive composition is proposed to be used as the adhesive for this.

### CITATION LIST

### Patent Literature

Patent Literature 1: Japanese Patent Application Laid-open No. 2022-69039

### SUMMARY OF THE INVENTION

### Technical Problem

In general, silicon can be transparent at an optical communication wavelength of 1.1 µm or more. Therefore, a silicon photonics, in which silicon is used to form an optical integrated circuit, is attracting attention. With the silicon photonics, it is possible to form a fine optical waveguide on a silicon substrate by using a conventional LSI manufacturing technology. For example, it is expected that a silicon chip having an optical waveguide with a nanometer size formed on a silicon substrate will be manufactured at a low cost.

There is a case that the silicon chip that is formed using a silicon photonics is required to connect an optical fiber. For example, in order to optically connect a plurality of silicon chips, there may be a need to connect an optical fiber to these silicon chips. In addition, for example, a silicon chip is expected to be mounted on a photoelectric hybrid substrate. When a plurality of the photoelectric hybrid substrates is connected by an optical fiber, there may be a need to connect the optical fiber to a silicon chip.

With regard to the method of connecting an optical fiber to a silicon chip, the inventor of the present invention has focused on a connecting method that uses a groove such as a V-shaped groove and a U-shaped groove. In this method, a groove for connecting an optical fiber is formed on the surface of a silicon chip, and then an optical fiber is adhered to the groove using a photo-curable adhesive. With this method, because of the groove, it is possible to precisely control the position of the optical fiber.

The silicon chip using a silicon photonics is still in the research stage, and the connection to an optical fiber is mainly done by manual work. Therefore, currently it is still allowed for the adhesive to take a long time to be cured. However, in the future industrialization stage, mass production at a high speed will be required, so that it will be required that curing of the adhesive can proceed rapidly. Specifically, it is required that the curing of the adhesive can proceed with a small exposure amount to obtain an enough adhesion strength.

On the other hand, in the connection of an optical fiber using a groove, the adhesive is required to have a high viscosity in order to ensure a uniform application of the adhesive. Specifically, the adhesive is required to have a viscosity of approximately 4 Pa-s or more at normal temperature (e.g., at 25°C).

However, when a resin composition used as the adhesive has a high viscosity, there has been a tendency that the exposure amount required to cure the adhesive increases. Therefore, there has been a trade-off relationship between the increase in the viscosity of the resin composition and the reduction of the exposure amount that is necessary to facilitate the curing of the resin composition. Accordingly, the resin composition that has a high viscosity and at the same time that is capable of adhering between an optical fiber and a groove of a silicon chip with a small exposure amount has not been realized yet.

The present invention has been conceived in view of the problems described above; therefore, an object of the present invention is to provide: a resin composition that has a high viscosity and that is capable of adhering between an optical fiber and a groove of a silicon chip with a small exposure amount; and a device using the resin composition and a method for producing the device.

### SOLUTION TO PROBLEM

The inventor of the present invention has extensively studied how to solve the problems described above. As a result, the inventor has found that it is possible to solve the problems described above by a resin composition containing (A) a liquid aliphatic oxetane resin, (B) a solid aliphatic epoxy resin, (C) a liquid aliphatic epoxy resin, and (D) a photocationic polymerization initiator; an amount of (E) an inorganic particle in the resin composition is equal to or less than a specific threshold value. The present invention has been completed based on this finding.

Namely, the present invention includes the following aspects.
<1> A resin composition for adhering an optical fiber to a groove of a silicon chip, the resin composition comprising:
   (A) a liquid aliphatic oxetane resin;
   (B) a solid aliphatic epoxy resin;
   (C) a liquid aliphatic epoxy resin; and
   (D) a photocationic polymerization initiator, wherein

   the resin composition contains or does not contain (E) an inorganic particle, and
   an amount of (E) the inorganic particle is 15% by mass or less relative to total 100% by mass of the resin composition.
<2> The resin composition according to <1>, wherein an amount of (A) the liquid aliphatic oxetane resin is 10 parts by mass or more and 50 parts by mass or less relative to 100 parts by mass of a total amount of (A) the liquid aliphatic oxetane resin, (B) the solid aliphatic epoxy resin, and (C) the liquid aliphatic epoxy resin .
<3> The resin composition according to <1> or <2>, wherein an amount of (B) the solid aliphatic epoxy resin is 40 parts by mass or more and 80 parts by mass or less relative to 100 parts by mass of a total amount of (A) the liquid aliphatic oxetane resin, (B) the solid aliphatic epoxy resin, and (C) the liquid aliphatic epoxy resin .
<4> The resin composition according to any one of <1> to <3>, wherein an amount of (C) the liquid aliphatic epoxy resin is 1 part by mass or more and 30 parts by mass or less relative to 100 parts by mass of a total amount of (A) the liquid aliphatic oxetane resin, (B) the solid aliphatic epoxy resin, and (C) the liquid aliphatic epoxy resin.
<5> The resin composition according to any one of <1> to <4>, wherein an amount of (D) the photocationic polymerization initiator is 0.1 parts by mass or more and 5 parts by mass or less relative to 100 parts by mass of a total amount of (A) the liquid aliphatic oxetane resin, (B) the solid aliphatic epoxy resin, and (C) the liquid aliphatic epoxy resin.
<6> The resin composition according to any one of <1> to <5>, wherein (B) the solid aliphatic epoxy resin comprises one or more resins selected from the group consisting of a hydrogenated bisphenol A epoxy resin and an aliphatic epoxy resin containing a 6-membered ring.
<7> The resin composition according to any one of <1> to <6>, wherein (C) the liquid aliphatic epoxy resin comprises one or more resins selected from the group consisting of a hydrogenated bisphenol A epoxy resin and an aliphatic epoxy resin containing a 6-membered ring.
<8> The resin composition according to any one of <1> to <7>, wherein an amount of (E) the inorganic particle is 0.1% by mass or less relative to total 100% by mass of the resin composition.
<9> A method for producing a device, the method comprising:
   a step of placing an optical fiber in a groove of a silicon chip;
   a step of applying the resin composition according to any one of <1> to <8> onto the groove; and
   a step of curing the resin composition.
<10> A device comprising:
   a silicon chip having a groove formed therein;
   an optical fiber placed in the groove of the silicon chip; and
   an adhesion portion at which the optical fiber is adhered to the groove, wherein
   the adhesion portion comprises a cured product of the resin composition according to any one of <1> to <8>.

### ADVANTAGEOUS EFFECTS OF INVENTION

According to the present invention, it is possible to provide a resin composition that has a high viscosity and that is capable of adhering between an optical fiber and a groove of a silicon chip with a small exposure amount; and a device using the resin composition and a method for producing the device.

### BRIEF DESCRIPTION OF THE DRAWINGS

Fig. 1 is a schematic perspective view of an optical device according to one embodiment of the present invention;
Fig. 2 is a cross-sectional view schematically illustrating the optical device according to one embodiment of the present invention;
Fig. 3 is a schematic perspective view of a silicon chip included in the optical device according to one embodiment of the present invention; and
Figs. 4A and 4B are rough side views illustrating one example of two test tubes to be used to determine the liquid state or the solid state of a resin.

### DETAILED DESCRIPTION OF THE PREFERRED EMBODIMENTS

Hereinafter, the present invention will be described by embodiments and examples. The present invention is not limited to the embodiments and the examples described below. Accordingly, the present invention may be carried out with any modification so far as such modification is not outside the claims or the equivalent thereof.

In the following description, the determination of the liquid state or the solid state of the resin will be made in accordance with Appendix 2, "Method of Confirmation of Liquid State" of the Ministerial Ordinance Concerning Tests and Properties of Hazardous Materials (Ordinance of the Ministry of Home Affairs No. 1 of 1989). The determination method is specifically as follows.

### (1) Equipment

### Constant temperature water bath:

The constant temperature water bath equipped with an agitator, a heater, a thermometer, and an automatic temperature controller (capable of controlling the temperature with an accuracy of ±0.1°C) with a depth of 150 mm or more is used.

For example, a low-temperature thermostatic water bath (model BU300) and a throw-in type thermostatic apparatus ThermoMate (model BF500), which are both manufactured by Yamato Scientific co., ltd., may be used in combination. The low-temperature thermostatic water bath (model BU300) containing approximately 22 liters of tap water is combined with ThermoMate (model BF500), and then it is switched on at a set temperature. The water temperature may be fine-adjusted by ThermoMate (model BF500) at ±0.1°C to the set temperature. Other apparatuses may be used as well when they are capable of doing the same fine-adjustment.

### Test tube:

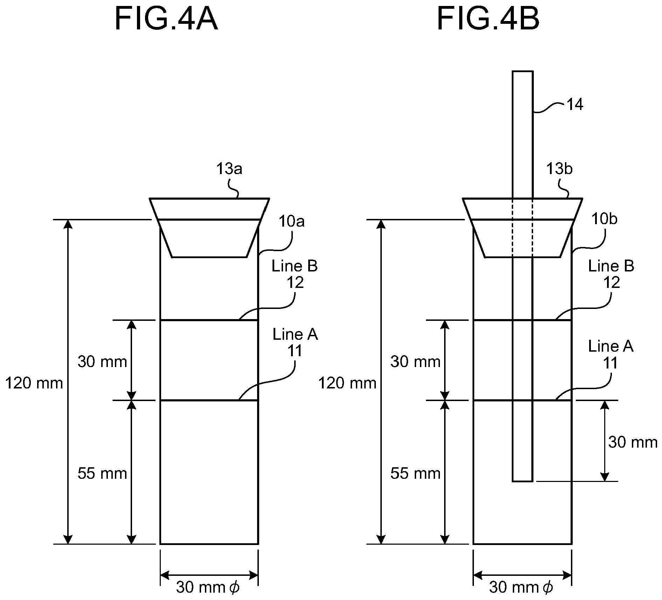

Figs. 4A and 4B are rough side views illustrating one example of two test tubes that is used to determine the liquid state or the solid state of a resin. As for the test tubes, as illustrated in Figs. 4A and 4B, a test tube 10a for determination of the liquid state and a test tube 10b for temperature measurement are used. The test tube 10a for determination of the liquid state is formed of a flat-bottomed cylindrical transparent glass with an inner diameter of 30 mm and a height of 120 mm. The test tube 10a for determination of the liquid state has marked lines A 11 and B 12 at 55 mm and 85 mm from the bottom of the tube, respectively. The mouth of the test tube 10a for determination of the liquid state is stoppered with a rubber stopper 13a. The test tube 10b for temperature measurement has the same size as the test tube 10a for determination of the liquid state, and is marked with lines in the same way as the test tube 10a for determination of the liquid state. The mouth of the test tube 10b for temperature measurement is stoppered with a rubber stopper 13b having a hole formed in its center for inserting and supporting a thermometer, and a thermometer 14 is inserted into the rubber stopper 13b. Hereinafter, the marked line at a height of 55 mm from the bottom of the tube is referred to as "Line A" and the marked line at a height of 85 mm from the bottom of the tube is referred to as "Line B".

As for the thermometer 14, the thermometer for measuring a solidifying point (SOP-58 scale range of 0°C to 100°C) as specified in JIS B7410 (1982) "Liquid-in-glass thermometers for testing of petroleum product" may be used. Other thermometers may also be used when they are capable of measuring a temperature range of 0°C to 100°C.

### (2) Test procedure

A sample that is allowed to be left at least 24 hours under an atmospheric pressure at ±5°C of the set temperature is charged into the test tube 10a for determination of the liquid state that is described in Fig. 4A and into the test tube 10b for temperature measurement that is described in Fig. 4B, to the marked Line A 11 in each test tube. The two test tubes 10a and 10b are placed upright and stationary in a low temperature thermostatic water bath at the set temperature described above with Line B 12 below the water surface of the water bath. The thermometer is inserted such that the lower edge thereof will be 30 mm below from Line A 11.

After the sample temperature reaches ±0.1°C of the set temperature, the sample is kept as it is for 10 minutes. After 10 minutes, the test tube 10a for determination of the liquid state is removed from the low temperature thermostatic water bath, then, this is immediately laid down horizontally on a horizontally laid testing board. Then, the time that the tip of the liquid surface in the test tube moves from Line A 11 to Line B 12 is measured with a stopwatch and recorded.

The resin with a measured time of 90 seconds or less is determined as a liquid resin.

The resin with a measured time more than 90 seconds is determined as a solid resin.

Whether it is the liquid resin or the solid resin is determined at a set temperature of 25°C, unless otherwise specifically mentioned.

### <Outline of resin composition>

A resin composition according to one embodiment of the present invention is a resin composition for adhering an optical fiber to a groove of a silicon chip. Specifically, the silicon chip has an optical waveguide for optically connecting to the optical fiber. On the silicon chip, the groove into which the optical fiber to be connected to the optical waveguide puts is formed. The resin composition according to the present embodiment is the resin composition that is capable of functioning as an adhesive for adhering the optical fiber to this groove.

The resin composition according to the present embodiment includes (A) a liquid aliphatic oxetane resin, (B) a solid aliphatic epoxy resin, (C) a liquid aliphatic epoxy resin, and (D) a photocationic polymerization initiator. In addition, the resin composition according to the present embodiment contains or does not contain (E) an inorganic particle. In addition, the amount of (E) the inorganic particle is equal to or less than a specific threshold value relative to 100% by mass of all components in the resin composition.

The resin composition of the present embodiment can have a high viscosity and can adhere the optical fiber to the groove of the silicon chip with a small exposure amount. Usually, according to the resin composition of the present embodiment, a cured product having a high transparency at the communication wavelength such as 1310 nm, which is used in silicon photonics, can be obtained.

Hereinafter, the mechanism by which the above-mentioned excellent effects are achieved will be described. However, the technical scope of the present invention is not restricted by the mechanism described below.

Generally, growth reaction in polymerization of an epoxy resin is slow. Thus the carbon chain of the polymer obtained by reacting the epoxy resin is prone to be short. Therefore, a cured product of the composition containing the epoxy resin may increase in its brittleness, readily resulting in delamination due to destruction of the cured product. Thus, a high adhesion strength cannot be achieved in some cases.

On the other hand, with regard to an oxetane resin, in general, it is possible to produce a high molecular weight polymer by a cationic polymerization. Therefore, it has been expected that the oxetane resin would provide an adhesive having a high mechanical strength after curing. However, the oxetane resin is prone to be slow in the initiation of polymerization, so that the polymerization thereof has been difficult with a small exposure amount.

In addition, a thin film such as SiOx, SiNx, or SiON is occasionally formed on a silicon chip, resulting in the tendency that a wettability of the silicon chip having the thin film with respect to an adhesive is lower as compared with a glass chip and a quartz chip. Therefore, in the case that the adhesive is formed on the silicon chip having the thin film formed thereon, when a fine phase-separation occurs in the adhesive, there has been the tendency that the adhesion is especially poor in the area where the resin is phase-separated. Therefore, when adhering the silicon chip, it is desirable to suppress occurrence of this fine phase separation.

From these considerations, in the present embodiment, the oxetane resin and the epoxy resin are combined. In general, in the epoxy resin, the initiation reaction thereof tends to be fast. Therefore, when the oxetane resin and the epoxy resin are combined, at first the epoxy resin initiates the reaction and generates many initiating species. In an environment where such a large number of initiating species are present, the reaction of the oxetane resin is initiated. Therefore, the exposure amount necessary to carry out the curing reaction of the resin composition containing the oxetane resin and the epoxy resin can be reduced as a whole.

If only a liquid epoxy resin is used as the epoxy resin to be combined with the oxetane resin as described above, the viscosity of the resulting resin composition tends to be low. In addition, because the liquid epoxy resin generally has a short molecular chain, the molecular chain of the polymer obtained after polymerization tends to be short. Therefore, unless the reaction proceeds sufficiently, it is not possible to obtain a cured product having a high mechanical strength; thus, an exposure amount required to facilitate curing enough to obtain a high adhesion strength tends to increase.

On the other hand, if only a solid epoxy resin is used as the epoxy resin to be combined with the oxetane resin as described above, it is expected to obtain the resin composition having a high viscosity. However, the solid epoxy resin has a long molecular chain, making it difficult for the molecule thereof to move within a system. Therefore, because the reaction is sluggish, in this case, too, an exposure amount required to facilitate curing enough to obtain a high adhesion strength tends to increase.

Therefore, in the present embodiment, the solid epoxy resin and the liquid epoxy resin are combined as the epoxy resin. With this combination, it is possible to increase the viscosity of the resin composition owing to the solid epoxy resin. In addition, because the liquid epoxy resin molecule easily moves in the system, this prevents the solid epoxy resin from making the reaction difficult. Therefore, while increasing the viscosity of the resin composition, the exposure amount required to facilitate curing enough to obtain a high adhesion strength can be decreased.

In addition, the present embodiment uses aliphatic resins such as (A) the liquid aliphatic oxetane resin, (B) the solid aliphatic epoxy resin, and (C) the liquid aliphatic epoxy resin. Because an aliphatic resin has a more flexible molecular skeleton than an aromatic resin, the molecules of the aliphatic resin readily entangle with each other, so that the viscosity of the resin composition can be effectively increased.

In addition, (A) the liquid aliphatic oxetane resin, (B) the solid aliphatic epoxy resin, and (C) the liquid aliphatic epoxy resin are all aliphatic resins, so that they are highly compatible. Therefore, the occurrence of the fine phase separation in the cured product can be suppressed, resulting in suppression of formation of the phase interface, which serves as a starting point of destruction. Thus, it is possible to effectively increase the mechanical strength of the cured product, so that the degree of progress of the curing required to achieve the intended adhesion strength can be lowered. Accordingly, this can allow the exposure amount to be lowered. In addition, owing to this high degree of compatibility, the occurrence of the fine phase separation can be suppressed, resulting in reduction of the reflection of a light at this phase interface; thus, usually, the transparency of the cured product at the communication wavelength can be increased.

In general, there is a tendency that a reaction of the oxetane resin proceeds at a high speed once the reaction starts. When the reaction of the oxetane resin proceeds at a high speed thereby causing the resin composition to be cured rapidly, this may leave a cure stress in the cured product. This residual stress may cause a destruction of the cured product. Thus it is expected that delamination prone to occur. However, the aliphatic chains included in (A) the liquid aliphatic oxetane resin, (B) the solid aliphatic epoxy resin, and (C) the liquid aliphatic epoxy resin used in the present embodiment are more flexible than an aromatic chain, so that the aliphatic chains can work to relieve the residual stress. Therefore, the delamination due to the residual stress can be suppressed, so that the degree of progress of curing required to achieve the intended adhesion strength can be lowered. Accordingly, it is possible to decrease the exposure amount.

In addition, in the resin composition according to the present embodiment, either the amount of (E) the inorganic particle is low, or (E) the inorganic particle is not contained therein. In the system containing (A) the liquid aliphatic oxetane resin, (B) the solid aliphatic epoxy resin, and (C) the liquid aliphatic epoxy resin in combination, the affinity of (E) the inorganic particle with the resin components excluding (E) the inorganic particle is low. Therefore, when there are many (E) the inorganic particles contained therein and the stress is concentrated at the interface between (E) the inorganic particle and the resin components, the resulting interface may become the starting point for destruction of the cured product to promote the destruction and cause delamination readily. On the contrary, in the present embodiment, the amount of (E) the inorganic particle is small, or there is no (E) the inorganic particle contained therein; thus, the destruction of the cured material starting from the interface between (E) the inorganic particle and the resin components can be suppressed. Therefore, the mechanical strength of the cured product that is required to achieve the intended adhesion strength can be lowered, thereby enabling to lower the degree of the progress of curing of the resin composition. This in turn can allow the exposure amount to be decreased. In addition, when the amount of (E) the inorganic particle is small or there is no (E) the inorganic particle included therein, the reflection of light on the surface of (E) the inorganic particle can be suppressed, so that the transparency of the cured product at the communication wavelength can be usually increased.

### <(A) Liquid aliphatic oxetane resin>

The resin composition according to the present embodiment includes (A) a liquid aliphatic oxetane resin as the component (A). (A) The liquid aliphatic oxetane resin represents the aliphatic oxetane resin that is in the liquid state. The aliphatic oxetane resin represents the resin that contains an oxetane ring and an aliphatic group. It is preferable that (A) the liquid aliphatic oxetane resin does not contain an aromatic ring. The aromatic ring is the ring that obeys Huckel's Rule where the number of electrons in the n-electron system on the ring is 4p + 2 (p is a natural number). (A) The liquid aliphatic oxetane resin can react to cure the resin composition when (D) a photocationic polymerization initiator receives light to generate a cation.

The number of oxetane rings that (A) the liquid aliphatic oxetane resin contains in one molecule is usually one or more, preferably two or more; this may be two.

The aliphatic group included in (A) the liquid aliphatic oxetane resin may be any of linear, branched, and cyclic; the aliphatic group is preferably linear or branched, more preferably linear. The aliphatic group may be any of a saturated aliphatic group and an unsaturated aliphatic group; a saturated aliphatic group is preferable. For example, (A) the liquid aliphatic oxetane resin may contain a monovalent aliphatic group, or a divalent or higher valent aliphatic group. The number of carbon atoms in the aliphatic group is usually 1 or more, and preferably 2 or more, and is preferably 8 or less, more preferably 6 or less, and still more preferably 4 or less. Preferable examples of the aliphatic group may include a monovalent linear hydrocarbon group and a divalent or higher valent linear hydrocarbon group. Specific examples of the linear hydrocarbon group may include an alkyl group such as a methyl group, an ethyl group, a propyl group, and a butyl group; and an alkylene group such as a methylene group, an ethylene group, a propylene group, and a butylene group.

Illustrative examples of (A) the liquid aliphatic oxetane resin may include resins (a-1) to (a-5) described below.

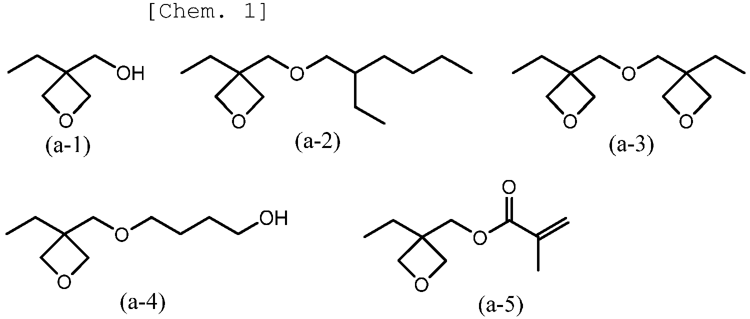

As for (A) the liquid aliphatic oxetane resin, a commercially available product may be used. Illustrative examples of the commercially available product of (A) the liquid aliphatic oxetane resin may include: "OXT-101" (resin of the formula (a-1)), "OXT-212" (resin of the formula (a-2)), "OXT-221" (resin of the formula (a-3)), in the ARON OXETANE series from Toagosei Co., Ltd.; and "EHO" (resin of the formula (a-1)), "HBOX" (resin of the formula (a-4)), and "OXMA" (resin of the formula (a-5)) in the ETERNACOLL series from UBE Corp.

As (A) the liquid aliphatic oxetane resin, one type thereof may be singly used, and two or more types thereof may be used in combination.

Because (A) the liquid aliphatic oxetane resin can be liquid at room temperature, the viscosity thereof can be low. For example, the range of the viscosity of (A) the liquid aliphatic oxetane resin at 25°C is preferably 0.1 mPa-s or more, more preferably 1 mPa·s or more, and still more preferably 7 mPa·s or more, and is preferably 100 mPa·s or less, more preferably 25 mPa·s or less, and still more preferably 16 mPa-s or less. The viscosity may be measured using an E-type viscometer (e.g., "RE-80U", 1°34'×R24 cone, manufactured by Toki Sangyo Co., Ltd.).

The range of the amount of (A) the liquid aliphatic oxetane resin is preferably 10 parts by mass or more, more preferably 20 parts by mass or more, and still more preferably 25 parts by mass or more, and is preferably 50 parts by mass or less, more preferably 40 parts by mass or less, and still more preferably 35 parts by mass or less, relative to 100 parts by mass of a total amount of (A) the liquid aliphatic oxetane resin, (B) the solid aliphatic epoxy resin, and (C) the liquid aliphatic epoxy resin. When the amount of (A) the liquid aliphatic oxetane resin is within the above-mentioned range, both the increase in the viscosity of the resin composition and the adhesion of the optical fiber to the groove of a silicon chip with a small exposure amount can be achieved at high levels.

The range of the amount of (A) the liquid aliphatic oxetane resin is preferably 10% by mass or more, more preferably 15% by mass or more, and still more preferably 20% by mass or more, and is preferably 50% by mass or less, more preferably 45% by mass or less, and still more preferably 40% by mass or less, relative to total 100% by mass of the resin composition. When the amount of (A) the liquid aliphatic oxetane resin is within the above-mentioned range, both the increase in the viscosity of the resin composition and the adhesion of the optical fiber to the groove of a silicon chip with a small exposure amount can be achieved at high levels.

The range of the total amount of (A) the liquid aliphatic oxetane resin, (B) the solid aliphatic epoxy resin, and (C) the liquid aliphatic epoxy resin relative to total 100% by mass of the resin composition is preferably 80% by mass or more, more preferably 85% by mass or more, and still more preferably 90% by mass or more; this may be 95% or more. The upper limit thereof is preferably 99.9% by mass or less, more preferably 99.5% by mass or less. When the total amount of (A) the liquid aliphatic oxetane resin, (B) the solid aliphatic epoxy resin, and (C) the liquid aliphatic epoxy resin is within the above-mentioned range, both the increase in the viscosity of the resin composition and the adhesion of the optical fiber to the groove of a silicon chip with a small exposure amount can be achieved at high levels.

### <(B) Solid aliphatic epoxy resin>

The resin composition according to the present embodiment includes (B) a solid aliphatic epoxy resin as the component (B). (B) The solid aliphatic epoxy resin represents the aliphatic epoxy resin that is in the solid state. The aliphatic epoxy resin represents the resin that contains an epoxy group and an aliphatic group. (B) The solid aliphatic epoxy resin does not include the resin that belongs to the component (A). It is preferable that (B) the solid aliphatic epoxy resin does not contain an aromatic ring. (B) The solid aliphatic epoxy resin can react to cure the resin composition when (D) a photocationic polymerization initiator receives light to generate a cation.

The number of the epoxy groups that (B) the solid aliphatic epoxy resin contains in one molecule is usually one or more; two or more is preferable. The epoxy group may be bonded directly or via a linking group to a non-aromatic carbon ring included in (B) the solid aliphatic epoxy resin. For example, an epoxy group, a glycidyl group, or a glycidyloxy group may be bonded to the non-aromatic carbon ring included in (B) the solid aliphatic epoxy resin.

The aliphatic group included in (B) the solid aliphatic epoxy resin may be linear, branched, or cyclic; more preferable is cyclic. The aliphatic group may be any of a saturated aliphatic group and an unsaturated aliphatic group; a saturated aliphatic group is preferable. For example, (B) the solid aliphatic epoxy resin may contain a monovalent aliphatic group, or a divalent or higher valent aliphatic group. The number of carbon atoms in this aliphatic group is usually 1 or more, preferably 2 or more, and still more preferably 6 or more. The upper limit of the number of the carbon atoms is preferably 20 or less, more preferably 15 or less; this may be 10 or less. Preferable examples of the aliphatic group may include a monovalent alicyclic hydrocarbon group and a divalent or higher valent alicyclic hydrocarbon group.

The alicyclic hydrocarbon group described above generally contains a non-aromatic carbon ring having a carbon atom as the ring constituent atom. The non-aromatic carbon ring is preferably 4- to 14-membered rings; a 6-membered ring is more preferable. Therefore, it is more preferable that (B) the solid aliphatic epoxy resin is an aliphatic epoxy resin containing a 6-membered ring (6-membered ring-containing epoxy resin). Specific examples of the non-aromatic carbon ring may include: a monocycloalkane ring such as a cyclobutane ring, a cyclopentane ring, a cyclohexane ring, a cycloheptane ring, and a cyclooctane ring; and a monocycloalkene ring such as a cyclobutene ring, a cyclopentene ring, a cyclohexene ring, a cycloheptene ring, a cyclooctene ring, a cyclopentadiene ring, and a cyclohexadiene ring. Among them, a monocycloalkane ring is preferable; a cyclohexane ring is more preferable.

(B) The solid aliphatic epoxy resin containing an alicyclic hydrocarbon group may be a hydrogenated epoxy resin. The "hydrogenated epoxy resin" represents an epoxy resin obtained by hydrogenating an epoxy resin containing an aromatic ring such as bisphenol A epoxy resin and bisphenol F epoxy resin. The hydrogenation rate of the hydrogenated epoxy resin is preferably 50% or more, more preferably 70% or more. The upper limit of the hydrogenation rate is usually 100%, and may be less than 100%.

Illustrative examples of (B) the solid aliphatic epoxy resin may include a hydrogenated bisphenol A epoxy resin, an aliphatic epoxy resin containing a cyclohexane ring, an alicyclic epoxy resin containing a dicyclopentadiene skeleton, a polyethylene glycol diglycidyl ether, and an epoxy resin containing an aliphatic polycyclic skeleton. Here, the hydrogenated bisphenol A epoxy resin is the epoxy resin obtained by hydrogenating a bisphenol A epoxy resin.

From the viewpoint of effectively obtaining the advantageous effects of the present invention, it is preferable that (B) the solid aliphatic epoxy resin contains one or more resins selected from the group consisting of a hydrogenated bisphenol A epoxy resin and an aliphatic epoxy resin containing a 6-membered ring. The distinction between the hydrogenated bisphenol A epoxy resin and the aliphatic epoxy resin containing a 6-membered ring is not exclusive; for example, the hydrogenated bisphenol A epoxy resin may be the aliphatic epoxy resin containing a 6-membered ring.

As for (B) the solid aliphatic epoxy resin, a commercially available product may be used. Illustrative examples of the commercially available product of (B) the solid aliphatic epoxy resin may include: "YX8040" (hydrogenated bisphenol A epoxy resin) manufactured by Mitsubishi Chemical Corp.; "EHPE3150" (alicyclic epoxy resin containing a poly(glycidylcyclohexyleneoxy) structure) manufactured by Daicel Corp.; "HP-7200" (alicyclic epoxy resin containing a dicyclopentadiene skeleton) manufactured by DIC Corp.; and "DE-102" and "DE-103" (both epoxy resins containing an aliphatic polycyclic skeleton) manufactured by ENEOS Corp.

As (B) the solid aliphatic epoxy resin, one type thereof may be singly used, and two or more types thereof may be used in combination.

The epoxy equivalent of (B) the solid aliphatic epoxy resin is preferably 50 g/eq. or more, more preferably 60 g/eq. or more, still more preferably 80 g/eq. or more, and especially preferably 110 g/eq. or more, and is preferably 5,000 g/eq. or less, more preferably 3,000 g/eq. or less, still more preferably 2,000 g/eq. or less, and especially preferably 1,000 g/eq. or less. The epoxy equivalent represents the mass of the resin per one equivalent of the epoxy group. The epoxy equivalent can be measured by the method in accordance with JIS K7236.

The weight-average molecular weight (Mw) of (B) the solid aliphatic epoxy resin is preferably in the range of 100 to 5,000, more preferably in the range of 250 to 3,000, and still more preferably in the range of 400 to 1,500. The weight-average molecular weight can be measured in terms of polystyrene by a gel permeation chromatography (GPC) method.

The range of the amount of (B) the solid aliphatic epoxy resin is preferably 40 parts by mass or more, more preferably 50 parts by mass or more, and still more preferably 55 parts by mass or more, and is preferably 80 parts by mass or less, more preferably 70 parts by mass or less, and still more preferably 65 parts by mass or less, relative to 100 parts by mass of the total amount of (A) the liquid aliphatic oxetane resin, (B) the solid aliphatic epoxy resin, and (C) the liquid aliphatic epoxy resin. When the amount of (B) the solid aliphatic epoxy resin is within the above-mentioned range, both the increase in the viscosity of the resin composition and the adhesion of the optical fiber to the groove of a silicon chip with a small exposure amount can be achieved at high levels.

It is preferable that the amount of (B) the solid aliphatic epoxy resin is more than that of (A) the liquid aliphatic oxetane resin on a mass basis. The range of the mass ratio ((B) the solid aliphatic epoxy resin / (A) the liquid aliphatic oxetane resin) of (A) the liquid aliphatic oxetane resin and (B) the solid aliphatic epoxy resin is preferably 1.1 or more, more preferably 1.2 or more, and still more preferably 1.6 or more, and is preferably 10 or less, more preferably 6 or less, and still more preferably 3 or less. When the mass ratio ((B) the solid aliphatic epoxy resin / (A) the liquid aliphatic oxetane resin) is within the above-mentioned range, both the increase in the viscosity of the resin composition and the adhesion of the optical fiber to the groove of a silicon chip with a small exposure amount can be achieved at high levels.

### <(C) Liquid aliphatic epoxy resin>

The resin composition according to the present embodiment includes (C) a liquid aliphatic epoxy resin as the component (C). (C) The liquid aliphatic epoxy resin represents the aliphatic epoxy resin that is in the liquid state. (C) The liquid aliphatic epoxy resin does not include the resin that belongs to the components (A) and (B). It is preferable that (C) the liquid aliphatic epoxy resin does not contain an aromatic ring. (C) The liquid aliphatic epoxy resin can react to cure the resin composition when (D) a cationic photo-polymerization initiator receives light to generate a cation.

The number of epoxy groups that (C) the solid aliphatic epoxy resin contains in one molecule thereof is usually one or more; two or more is preferable. The epoxy group may be bonded directly or via a linking group to a non-aromatic carbon ring included in (C) the liquid aliphatic epoxy resin. The carbon atom that forms the epoxy group may be part of the non-aromatic carbon ring included in (C) the liquid aliphatic epoxy resin. In other words, the epoxy group may be formed by bonding an oxygen atom to two carbon atoms that form a non-aromatic carbon ring included in (C) the liquid aliphatic epoxy resin.

The aliphatic group included in (C) the liquid aliphatic epoxy resin may be selected from the range described as the aliphatic groups that are included in (B) the solid aliphatic epoxy resin. The aliphatic group included in (C) the liquid aliphatic epoxy resin and the aliphatic group included in (B) the solid aliphatic epoxy resin may be the same or different from each other. The preferable range of the aliphatic group included in (C) the liquid aliphatic epoxy resin may be the same as the preferable range of the aliphatic group included in (B) the solid aliphatic epoxy resin.

When (C) the liquid aliphatic epoxy resin contains an alicyclic hydrocarbon group, the range of the non-aromatic carbon ring that may be included in the alicyclic hydrocarbon group may be the same as the range of the non-aromatic carbon ring that may be included in (B) the solid aliphatic epoxy resin. Among the non-aromatic carbon rings, a monocycloalkane ring is preferable; a cyclohexane ring is more preferable.

(C) The liquid aliphatic epoxy resin containing an alicyclic hydrocarbon group may be a hydrogenated epoxy resin. The hydrogenation rate of the hydrogenated epoxy resin is preferably 50% or more, more preferably 70% or more. The upper limit of the hydrogenation rate is usually 100%, and may be less than 100%.

Illustrative examples of (C) the liquid aliphatic epoxy resin may include: a hydrogenated bisphenol A epoxy resin; an aliphatic epoxy resin containing a cyclohexane ring; an alicyclic epoxy resin containing a dicyclopentadiene skeleton; an aliphatic polycyclic epoxy resin; a resin obtained by glycidyl-etherification of an aliphatic diol, an aliphatic triol, an aliphatic tetraol, an aliphatic pentaol, or an aliphatic hexaol.

From the viewpoint of effectively obtaining the advantageous effects of the present invention, it is preferable that (C) the liquid aliphatic epoxy resin contains one or more resins selected from the group consisting of a hydrogenated bisphenol A epoxy resin and an aliphatic epoxy resin containing a 6-membered ring.

As for (C) the liquid aliphatic epoxy resin, a commercially available product thereof may be used. Illustrative examples of the commercially available product of (C) the liquid aliphatic epoxy resin may include: "YX8000D" (hydrogenated bisphenol A epoxy resin, the resin of the formula (c-1) below), "YX7400N" and "YED216N", manufactured by Mitsubishi Chemical Corp.; "Celoxide 2021P" (alicyclic epoxy resin containing a cyclohexane ring, the resin of the formula (c-2) below) manufactured by Daicel Corp.; "EP-4088L" (alicyclic epoxy resin containing a dicyclopentadiene skeleton) manufactured by ADEKA Corp.; "EX-321L", "EX-1610", "EX-212L", "EX-214L", "EX810P", "EX991L", and "EX121", manufactured by Nagase ChemteX Corp.; and "THI-DE" manufactured by ENEOS Corp.

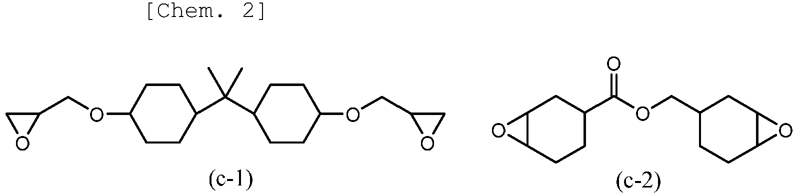

As (C) the liquid aliphatic epoxy resin, one type thereof may be singly used, and two or more types thereof may be used in combination.

The range of the epoxy equivalent of (C) the liquid aliphatic epoxy resin may be the same as the range of the epoxy equivalent of (B) the solid aliphatic epoxy resin.

The range of the weight-average molecular weight (Mw) of (C) the liquid aliphatic epoxy resin may be the same as the range of the weight-average molecular weight of (B) the solid aliphatic epoxy resin.

Because (C) the liquid aliphatic epoxy resin can be liquid at room temperature, the viscosity thereof can be low. The viscosity of (C) the liquid aliphatic epoxy resin may be lower than that of (A) the liquid aliphatic oxetane resin, but preferably higher. The range of the viscosity of (C) the liquid aliphatic epoxy resin at 25°C is preferably 10 mPa·s or more, more preferably 100 mPa·s or more, and still more preferably 200 mPa-s or more, and is preferably 500,000 mPa-s or less, more preferably 100,000 mPa·s or less, and still more preferably 80,000 mPa·s or less.

The range of the amount of (C) the liquid aliphatic epoxy resin is preferably 1 part by mass or more, more preferably 2 parts by mass or more, and still more preferably 5 parts by mass or more, and is preferably 30 parts by mass or less, more preferably 20 parts by mass or less, and still more preferably 15 parts by mass or less, relative to 100 parts by mass of the total amount of (A) the liquid aliphatic oxetane resin, (B) the solid aliphatic epoxy resin, and (C) the liquid aliphatic epoxy resin. When the amount of (C) the liquid aliphatic epoxy resin is within the above-mentioned range, both the increase in the viscosity of the resin composition and the adhesion of the optical fiber to the groove of a silicon chip with a small exposure amount can be achieved at high levels.

It is preferable that the amount of (C) the liquid aliphatic epoxy resin is less than that of (A) the liquid aliphatic oxetane resin on a mass basis. The range of the mass ratio ((C) the liquid aliphatic epoxy resin / (A) the liquid aliphatic oxetane resin) of (A) the liquid aliphatic oxetane resin and (C) the liquid aliphatic epoxy resin is preferably 0.01 or more, more preferably 0.05 or more, and still more preferably 0.10 or more, and is preferably 0.9 or less, more preferably 0.7 or less, and still more preferably 0.6 or less. When the mass ratio ((C) the liquid aliphatic epoxy resin / (A) the liquid aliphatic oxetane resin) is within the above-mentioned range, both the increase in the viscosity of the resin composition and the adhesion of the optical fiber to the groove of a silicon chip with a small exposure amount can be achieved at high levels.

### <(D) Photocationic polymerization initiator>

The resin composition according to the present embodiment includes (D) a photocationic polymerization initiator as the component (D). (D) The photocationic polymerization initiator does not include those that belong to the components (A) to (C) described above. (D) The photocationic polymerization initiator may initiate the reaction of the components (A) to (C) by generating a cation by receiving light.

As for (D) the photocationic polymerization initiator, for example, a compound that is capable of generating an acid upon being irradiated with an active light may be used. Illustrative examples of (D) the photocationic polymerization initiator may include an oxime ester compound, a halogen-containing compound, an onium salt compound, a diazoketone compound, a sulfone compound, a sulfonic acid compound, a sulfonimide compound, and a diazomethane compound. Among these, an onium salt compound is preferable.

Illustrative examples of the onium salt compound that may be preferably used as (D) the photocationic polymerization initiator may include an iodonium salt, a sulfonium salt, a phosphonium salt, a diazonium salt, and a pyridinium salt. Specific examples of the preferable onium salt compound may include tris(4-methylphenyl)sulfonium trifluoromethanesulfonate, tris(4-methylphenyl)sulfonium hexafluorophosphonate, diphenyliodonium trifluoromethanesulfonate, diphenyliodonium p-toluenesulfonate, diphenyliodonium hexafluoroantimonate, diphenyliodonium hexafluorophosphate, diphenyliodonium tetrafluoroborate, diphenyl[4-(phenylthio)phenyl]sulfonium tetrakis(pentafluorophenyl)borate, diphenyl[4-(phenylthio)phenyl]sulfonium hexafluorophosphate, triphenylsulfonium trifluoromethanesulfonate, triphenylsulfonium p-toluenesulfonate, triphenylsulfonium hexafluoroantimonate, 4-tert-butylphenyl diphenylsulfonium trifluoromethanesulfonate, 4-tert-butylphenyl diphenylsulfonium p-toluenesulfonate, and 4,7-di-n-butoxynaphthyltetrahydrothiophenium trifluoromethanesulfonate.

As for (D) the photocationic polymerization initiator, for example, an onium gallate salt having a triarylsulfonium cation and a gallate anion may be used. Illustrative examples of the triarylsulfonium cation may include a compound represented by the following formula (d-1) .

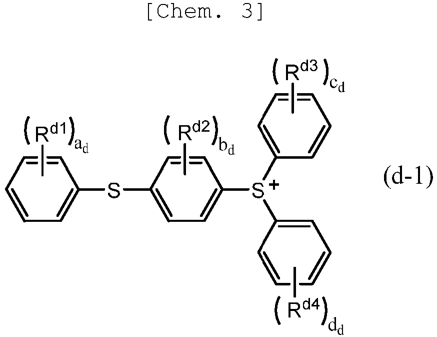

In the formula (d-1), R^{d1}, R^{d2}, R^{d3}, and R^{d4} each independently represent a group selected from the group consisting of an alkyl group, a hydroxy group, an alkoxy group, an alkylcarbonyl group, an arylcarbonyl group, an alkoxycarbonyl group, an aryloxycarbonyl group, an arylthiocarbonyl group, an acyloxy group, an arylthio group, an alkylthio group, an aryl group, a heterocyclic hydrocarbon group, an aryloxy group, an alkylsulfinyl group, an arylsulfinyl group, an alkylsulfonyl group, an arylsulfonyl group, a hydroxy(poly)alkyleneoxy group, a group forming a fused polycyclic hydrocarbon skeleton by fusing with a benzene ring of the bonding partner, a substituted or an unsubstituted silyl group, a substituted or an unsubstituted amino group, a cyano group, a nitro group, and a halogen atom.

Illustrative examples of the alkyl group in R^{d1} to R^{d4} may include a linear alkyl group having 1 to 18 carbon atoms, such as a methyl group, an ethyl group, an n-propyl group, an n-butyl group, an n-pentyl group, an n-octyl group, an n-decyl group, an n-dodecyl group, an n-tetradecyl group, an n-hexadecyl group, and an n-octadecyl group; a branched alkyl group having 3 to 18 carbon atoms, such as an isopropyl group, an isobutyl group, a sec-butyl group, a tert-butyl group, an isopentyl group, a neopentyl group, a tert-pentyl group, an isohexyl group, and an isooctadecyl group; and a cycloalkyl group having 3 to 18 carbon atoms, such as a cyclopropyl group, a cyclobutyl group, a cyclopentyl group, a cyclohexyl group, and a 4-decylcyclohexyl group.

Illustrative examples of the alkoxy group in R^{d1} to R^{d4} may include a linear alkoxy group having 1 to 18 carbon atoms and a branched alkoxy group having 3 to 18 carbon atoms. Specific examples thereof may include a methoxy group, an ethoxy group, a propoxy group, an isopropoxy group, a butoxy group, an isobutoxy group, a sec-butoxy group, a tert-butoxy group, a hexyloxy group, a decyloxy group, a dodecyloxy group, and an octadecyloxy group.

Illustrative examples of the aryl group in R^{d1} to R^{d4} may include an aryl group having 6 to 10 carbon atoms, such as a phenyl group, a tolyl group, a dimethylphenyl group, and a naphthyl group.

The number of the ring contained in the fused polycyclic hydrocarbon skeleton in R^{d1} to R^{d4} may be two or more and six or less, and is preferably four or less, and more preferably three or less. The fused polycyclic hydrocarbon skeleton may have a skeleton in which cyclic hydrocarbons containing rings of different numbers of ring members, such as a 5-membered ring and a 6-membered ring, are fused with each other. Examples of such fused polycyclic hydrocarbon skeleton may include a fluorene skeleton and a derivative of a fluorene skeleton. The fused polycyclic hydrocarbon skeleton may be a phenanthrene skeleton, and one or two substituents such as an alkyl group may be bonded at the ninth position of the phenanthrene skeleton.

Examples of the substituent in R^{d1} to R^{d4} are the same as the groups described as R^{d1} to R^{d4} in the above formula (d-1).

In the formula (d-1), the symbols a_{d}, b_{d}, c_{d}, and d_{d} represent the numbers of R^{d1}, R^{d2}, R^{d3}, and R^{d4}, respectively. Specifically, the symbol a_{d} represents an integer of 1 to 5. The symbol b_{d} represents an integer of 0 to 4. The symbols c_{d} and d_{d} each independently represent an integer of 0 to 5.

Illustrative example of the gallate anion may include a compound represented by the following formula (d-2) .

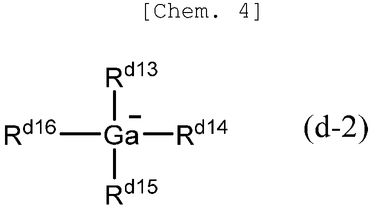

In the formula (d-2), R^{d13}, R^{d14}, R^{d15}, and R^{d16} each independently represent a substituted or unsubstituted phenyl group or a perfluoroalkyl group. The substituent for the phenyl group is preferably a group selected from the group consisting of a perfluoroalkyl group, a perfluoroalkoxy group, a nitro group, a cyano group, an acyl group, and a halogen atom.

In R^{d13} to R^{d16}, the number of carbon atoms in the perfluoroalkyl group is preferably 1 to 8, more preferably 1 to 4. Specific examples of the perfluoroalkyl group may include: a linear perfluoroalkyl group such as a trifluoromethyl group, a pentafluoroethyl group, a heptafluoropropyl group, a nonafluorobutyl group, a perfluoropentyl group, and a perfluorooctyl group; a branched perfluoroalkyl group such as a heptafluoroisopropyl group, nonafluoroisobutyl group, a nonafluoro-sec-butyl group, and a nonafluoro tert-butyl group; and a perfluorocycloalkyl group such as a perfluorocyclopropyl group, a perfluorocyclobutyl group, a perfluorocyclopentyl group, and a perfluorocyclohexyl group.

In R^{d13} to R^{d16}, the number of carbon atoms of the perfluoroalkoxy group is preferably 1 to 8, more preferably 1 to 4. Specific examples of the perfluoroalkoxy group may include: a linear perfluoroalkoxy group such as a trifluoromethoxy group, a pentafluoroethoxy group, a heptafluoropropoxy group, a nonafluorobutoxy group, a perfluoropentyloxy group, and a perfluorooctyloxy group; and a branched perfluoroalkoxy group such as a heptafluoroisopropoxy group, a nonafluoroisobutoxy group, a nonafluoro-sec-butoxy group, and a nonafluoro-tert-butoxy group.

In R^{d13} to R^{d16}, illustrative examples of the halogen atom may include a fluorine atom, a chlorine atom, a bromine atom, and an iodine atom.

From the viewpoint of the cationic polymerization performance, R^{d13} to R^{d16} are preferably a phenyl group that is substituted with at least one selected from the group consisting of a perfluoroalkyl group and a fluorine atom. R^{d13}, R^{d14}, R^{d13}, and R^{d16} may be the same or different from each other.

Illustrative examples of the gallate anion may include (C₆F₅)₄Ga⁻, ((CF₃)₂C₆H₃)₄Ga⁻, (CF₃C₆H₄)₄Ga⁻, (C₆F₅)₂GaF₂-, C₆F₅GaF₃⁻, and (C₆H₃F₂)₄Ga⁻.

As for (D) the photocationic polymerization initiator, a commercially available product may be used. Illustrative examples of (D) the photocationic polymerization initiator that is commercially available may include an onium salt compound such as "TS-01" and "TS-91" manufactured by Sanwa Chemical co., LTD.; "CPI-110A", "CPI-110B", "CPI-110P", "CPI-210S", "HS-1", "LW-S1", "IK-1", "CPI-310B", and "CPI-310FG", manufactured by San-Apro Ltd.; and "SI-110L", "SI-180L", and "SI-100L", manufactured by Sanshin Chemical Industry Co., Ltd.

As (D) the photocationic polymerization initiator, one type thereof may be singly used, and two or more types thereof may be used in combination.

The range of the amount of (D) the photocationic polymerization initiator is preferably 0.1 parts by mass or more, more preferably 0.3 parts by mass or more, and still more preferably 0.5 parts by mass or more, and is preferably 5 parts by mass or less, more preferably 4 parts by mass or less, and still more preferably 3 parts by mass or less, relative to 100% by mass of the total amount of (A) the liquid aliphatic oxetane resin, (B) the solid aliphatic epoxy resin, and (C) the liquid aliphatic epoxy resin. When the amount of (D) the photocationic polymerization initiator is within the above-mentioned range, both the increase in the viscosity of the resin composition and the adhering of the optical fiber to the groove of a silicon chip with a small exposure amount can be achieved at high levels.

### <(E) Inorganic particle>

The resin composition according to the present embodiment may or may not include (E) an inorganic particle as the component (E). The amount of (E) the inorganic particle in the resin composition is usually 15% by mass or less, preferably 10% by mass or less, more preferably 5% by mass or less, and especially preferably 0.1% by mass or less, relative to total 100% by mass of the resin composition. Because the resin composition may not contain (E) the inorganic particle, the lower limit thereof is usually 0% by mass or more; this may be 0% by mass.

As for the material for (E) the inorganic particle, an inorganic compound is used. Illustrative examples of the material for (E) the inorganic particle may include silica, alumina, glass, cordierite, silicon oxide, barium sulfate, barium carbonate, talc, clay, mica powder, zinc oxide, hydrotalcite, boehmite, aluminum hydroxide, magnesium hydroxide, calcium carbonate, magnesium carbonate, magnesium oxide, boron nitride, aluminum nitride, manganese nitride, aluminum borate, strontium carbonate, strontium titanate, calcium titanate, magnesium titanate, bismuth titanate, titanium oxide, zirconium oxide, barium titanate, barium zirconate titanate, barium zirconate, calcium zirconate, zirconium phosphate, and phosphorus zirconium tungstate. Among these, silica and alumina are preferable; silica is more preferable. Therefore, (E) the inorganic particle preferably includes silica, and may include only silica. Illustrative examples of silica may include amorphous silica, fused silica, crystalline silica, synthetic silica, and hollow silica. As for the silica, spherical silica is preferable. As (E) the inorganic particle, one type thereof may be singly used, and two or more types thereof may be used in combination.

Illustrative examples of the commercially available product of (E) the inorganic particle may include: "SP60-05" and "SP507-05", manufactured by Nippon Steel Chemical & Material Co., Ltd.; "YC100C", "YA050C", "YA050C-MJE", "YA010C", "SC2500SQ", "SO-C4", "SO-C2", and "SO-C1", manufactured by Admatechs Co., Ltd.; "UFP-30", "DAW-03", and "FB-105FD", manufactured by Denka Co., Ltd.; "Silfil NSS-3N", "Silfil NSS-4N", and "Silfil NSS-5N", manufactured by Tokuyama Corp.; "Cellspheres" and "MGH-005", manufactured by Taiheiyo Cement Corp.; and "200" manufactured by Nippon Aerosil Co., Ltd.

The average particle diameter of (E) the inorganic particle is preferably 0.01 µm or more, more preferably 0.05 µm or more, and still more preferably 0.1 µm or more, and is preferably 10 µm or less, more preferably 5 µm or less, still more preferably 3 µm or less, and still more preferably 1 µm or less.

The average particle diameter of (E) the inorganic particle can be measured with a laser diffraction scattering method based on the Mie scattering theory. Specifically, the particle diameter distribution of the inorganic particles is prepared on a volume basis by using a laser diffraction scattering type particle diameter distribution analyzer, in which the median diameter thereof can be measured as the average particle diameter. The measurement sample that is prepared by weighing 100 mg of the inorganic particles and 10 g of methyl ethyl ketone into a vial followed by dispersing them with ultrasound for 10 minutes may be used. The sample is measured using a laser diffraction particle diameter distribution analyzer with blue and red light source wavelengths; the volume-based particle size distribution of the inorganic particles is measured by the flow cell method. From the particle size distribution thus obtained, the average particle diameter may be calculated as the median diameter thereof. A laser diffraction particle diameter distribution analyzer is, for example, "LA-960" manufactured by HORIBA, Ltd.

The specific surface area of (E) the inorganic particle is preferably 0.1 m²/g or more, more preferably 0.5 m²/g or more, still more preferably 1 m²/g or more, and especially preferably 3 m²/g or more, and is preferably 100 m²/g or less, more preferably 70 m²/g or less, still more preferably 50 m²/g or less, and especially preferably 40 m²/g or less. The specific surface area of (E) the inorganic particle can be measured according to the BET method by adsorbing a nitrogen gas onto the sample surface using a specific surface area measurement instrument ("Macsorb HM Model 1210" manufactured by Mountech Co., Ltd.) and calculating the specific surface area with the BET multipoint method.

It is preferable that (E) the inorganic particle is treated with a surface treatment agent from the viewpoint of enhancing moisture resistance and dispersibility. Illustrative examples of the surface treatment agent may include a fluorine-containing silane coupling agent, an amino silane type coupling agent, an epoxysilane type coupling agent, a mercaptosilane type coupling agent, a silane type coupling agent, an alkoxysilane, an organosilazane compound, and a titanate type coupling agent. As the surface treatment agent, one type thereof may be singly used, and two or more types thereof may be used in combination.

Illustrative examples of the surface treatment agent that is commercially available may include "KBM403" (3-glycidoxypropyl trimethoxysilane) manufactured by Shin-Etsu Chemical Co., Ltd., "KBM803" (3-mercaptopropyl trimethoxysilane) manufactured by Shin-Etsu Chemical Co., Ltd., "KBE903" (3-aminopropyl triethoxysilane) manufactured by Shin-Etsu Chemical Co., Ltd., "KBM573" (N-phenyl-3-aminopropyl trimethoxysilane) manufactured by Shin-Etsu Chemical Co., Ltd., "SZ-31" (hexamethyl disilazane) manufactured by Shin-Etsu Chemical Co., Ltd., "KBM103" (phenyl trimethoxysilane) manufactured by Shin-Etsu Chemical Co., Ltd., "KBM-4803" (long chain epoxy type silane coupling agent) manufactured by Shin-Etsu Chemical Co., Ltd., and "KBM-7103" (3,3,3-trifluoropropyl trimethoxysilane) manufactured by Shin-Etsu Chemical Co., Ltd.

From the viewpoint of enhancing the dispersibility of the inorganic particle, it is preferable that the degree of surface treatment with the surface treatment agent is within a specific range. Specifically, it is preferable that 100% by mass of the inorganic particle is surface-treated with 0.2% to 5% by mass of the surface treatment agent, more preferably with 0.2% to 3% by mass of the surface treatment agent, and still more preferably with 0.3% to 2% by mass of the surface treatment agent.

The degree of the surface treatment by the surface treatment agent may be evaluated by the amount of carbon per unit surface area of the inorganic particle. From the viewpoint of enhancing the dispersibility of the inorganic particle, the amount of carbon per unit surface area of the inorganic particle is preferably 0.02 mg/m² or more, more preferably 0.1 mg/m² or more, and still more preferably 0.2 mg/m² or more. On the other hand, from the viewpoint of preventing the increase in the melt viscosity of the resin composition, the above-mentioned carbon amount is preferably 1.0 mg/m² or less, more preferably 0.8 mg/m² or less, and still more preferably 0.5 mg/m² or less.

The amount of carbon per unit surface area of (E) the inorganic particle can be measured after the inorganic particles are washed with a solvent (e.g., methyl ethyl ketone (MEK)) after the surface treatment. Specifically, a sufficient amount of MEK as a solvent is added to the inorganic particles that have been surface treated with the surface treatment agent, and then the particles are cleaned with ultrasound at 25°C for 5 minutes. After removing the supernatant liquid and drying the solid, the amount of carbon per unit surface area of the inorganic particle can be measured using a carbon analyzer. As for the carbon analyzer, an instrument such as "EMIA-320V" manufactured by HORIBA, Ltd. may be used.

### < (F) Sensitizer>

The resin composition according to the present embodiment may further include (F) a sensitizer as an optional component. (F) The sensitizer as the component (F) does not include those that belong to the components (A) to (E) described above. In general, (F) the sensitizer can be excited by receiving light, but (F) the sensitizer itself does not generate a cationic species. In general, when (F) the sensitizer is excited, the energy thereof is given to (D) the photocationic polymerization initiator, thereby enabling to promote the generation of the cationic species. Therefore, the use of (F) the sensitizer can promote the curing of the resin composition.

Illustrative examples of (F) the sensitizer may include a benzophenone compound such as Michler's ketone, 4,4'-bis(diethylamino)benzophenone, and 4-morpholinobenzophenone; a cyclic alkane compound such as 2,5-bis(4'-diethylaminobenzal)cyclopentane, 2,6-bis(4'-diethylaminobenzal)cyclohexanone, and 2,6-bis(4'-diethylaminobenzal)-4-methylcyclohexanone; a chalcone compound such as 4,4'-bis(dimethylamino)chalcone and 4,4'-bis(diethylamino)chalcone; an indanone compound such as p-dimethylaminocinnamylideneindanone and p-dimethylaminobenzylideneindanone; an anthracene compound such as 9,10-dibutoxyanthracene (DBA), 9,10-diethoxyanthracene (DEA), 9,10-dipropoxyanthracene, and 9,10-bis(2-ethylhexyloxy)anthracene; a thiazole compound such as 2-(p-dimethylaminophenylbiphenylene)benzothiazole, 2-(p-dimethylaminophenylvinylene)benzothiazole, and 2-(p-dimethylaminophenylvinylene)isonaphthothiazole; an acetone compound such as 1,3-bis(4'-dimethylaminobenzal)acetone and 1,3-bis(4'-diethylaminobenzal)acetone; a coumarin compound such as 3,3'-carbonyl-bis(7-diethylaminocoumarin), 3-acetyl-7-dimethylaminocoumarin, 3-ethoxycarbonyl-7-dimethylaminocoumarin, 3-benzyloxycarbonyl-7-dimethylaminocoumarin, 3-methoxycarbonyl-7-diethylaminocoumarin, and 3-ethoxycarbonyl-7-diethylaminocoumarin; an amine compound such as N-phenyl-N'-ethylethanolamine, N-phenyldiethanolamine, N-p-tolyldiethanolamine, N-phenylethanolamine, isoamyl dimethylaminobenzoate, and isoamyl diethylaminobenzoate; a heterocycle compound such as 2-mercaptobenzimidazole, 2-mercaptobenzothiazole, 2-(p-dimethylaminostyryl)benzoxazole, 2-(p-dimethylaminostyryl)benzthiazole, 2-(p-dimethylaminostyryl)naphtho(1,2-d)thiazole, 1-phenyl-5-mercaptotetrazole, and 1-p-hydroxyphenyl-5-mercaptotetrazole; and a styrene compound such as 2-(p-dimethylaminobenzoyl)styrene. Among these, an anthracene compound is preferable.

As (F) the sensitizer, one type thereof may be singly used, and two or more types thereof may be used in combination.

The range of the amount of (F) the sensitizer is preferably 0.1 parts by mass or more, more preferably 0.2 parts by mass or more, and still more preferably 0.3 parts by mass or more, and is preferably 5 parts by mass or less, more preferably 4 parts by mass or less, and still more preferably 3 parts by mass or less, relative to 100 parts by mass of the total amount of (A) the liquid aliphatic oxetane resin, (B) the solid aliphatic epoxy resin, and (C) the liquid aliphatic epoxy resin.

### <(G) Optional additive>

The resin composition according to the present embodiment may further include (G) an optional additive as an optional component, as long as the intended effects of the present invention are not impaired. (G) The optional additive as the component (G) does not include those that belong to the components (A) to (F) described above. Illustrative examples of (G) the optional additive may include: an adhesive adjuvant; a surfactant such as a fluorine type surfactant, a nonionic type surfactant, a cationic type surfactant, an anionic type surfactant, and a silicone type surfactant; a polymerization inhibitor; a defoaming agent; a flame retardant; a thermal cationic polymerization initiator; a curable resin other than the aforementioned components (A) to (C); and a thermoplastic resin. As (G) the optional additive, one type thereof may be singly used, and two or more types thereof may be used in combination.

### <(H) Solvent>

The resin composition according to the present embodiment may further include (H) a solvent as an optional volatile component in order to dissolve or disperse the solid components such as the components (A) to (G). As for (H) the solvent, an organic solvent is usually used. Illustrative examples of the organic solvent may include a ketone type solvent, an ester type solvent, an ether type solvent, an alcohol type solvent, an amide type solvent, a sulfoxide type solvent, a nitrile type solvent, an aliphatic hydrocarbon type solvent, and an aromatic hydrocarbon type solvent. As (H) the solvent, one type thereof may be singly used, and two or more type thereof may be used in combination.

From the viewpoint of suppressing the generation of a void, it is preferable that the amount of (H) the solvent is small. Specifically, the amount of (H) the solvent is preferably 10% by mass or less, more preferably 5% by mass or less, still more preferably 1% by mass or less, and especially preferably 0.1% by mass or less, relative to total 100% by mass of the resin composition. Because it is preferable that the resin composition does not contain (H) the solvent, the lower limit of the amount of (H) the solvent is 0% by mass or more, and is especially preferably 0% by mass.

### <Properties of resin composition and of the cured product of the resin composition>

The resin composition according to the present embodiment can have the properties in the form of liquid at normal temperature. The resin composition can be cured by exposure to a light such as a UV light that causes a reaction to bond the resins such as the components (A) to (C). The cured product of the resin composition obtained by this curing can exhibit a high adhesion strength sufficiently enough to adhere the optical fiber to the groove of the silicon chip. Therefore, the resin composition according to the present embodiment can function as the adhesive to adhere the optical fiber to the groove of the silicon chip.

The resin composition according to the present embodiment can have a high viscosity. For example, the viscosity of the resin composition at 25°C is usually 4 Pa·s or more, preferably 10 Pa·s or more, and more preferably 20 Pa·s or more. The upper limit of the viscosity is preferably 200 Pa·s or less, more preferably 160 Pa·s or less, and still more preferably 130 Pa·s or less. The viscosity can be measured using an E-type viscometer ("RE-80U", 1°34'×R24 cone, manufactured by Toki Sangyo Co., Ltd.).

Because the resin composition according to the present embodiment has a high viscosity as described above, an excessively high fluidity thereof in the groove of the silicon chip can be suppressed. Therefore, when the resin composition is used as an adhesive to adhere the optical fiber to the groove of the silicon chip, preferably the resin composition can be prevented from flowing out to an unintended location. For example, when conducting the procedure described in the section <Test 4. Appearance evaluation test> in [Examples] to be described later, the optical fiber can be preferably adhered to the V-shaped groove while ensuring that the resin composition or its cured material does not stick out from the lid of the V-shaped groove.

With the resin composition according to the present embodiment, it is possible to adhere the optical fiber to the groove of the silicon chip with a small exposure amount. Specifically, when the optical fiber is adhered to the groove by using the resin composition, which is then followed by curing the resin composition by irradiating light to this resin composition, the adhesion strength sufficient to fix the optical fiber to the groove can be obtained with a small exposure amount. For example, this may be confirmed by carrying out the procedure described in the section <Test 3. Test for adhesion between groove and optical fiber> in [Examples] to be described later. In this case, the minimum exposure amount required to obtain the adhesion strength enough to prevent the optical fiber from being peeled off from the V-shaped groove of the silicon chip can be preferably 2000 mJ/cm² or less, more preferably 500 mJ/cm² or less, and still more preferably 100 mJ/cm² or less.

According to the resin composition of the present embodiment, usually it is possible to adhere the optical fiber to a silicon member with a high adhesion strength; thus, it is possible to adhere the optical fiber to the groove of the silicon chip with a high adhesion strength. For example, by conducting the procedure described in the section <Test 1. Measurement test of adhesion strength> in [Examples] to be described later, the silicon chip (such as a capacitor chip) is adhered to the cured product of the resin composition. In this case, the adhesion strength required to peel-off the chip from the cured product obtained with the exposure amount of 2000 mJ/cm² can be preferably 12 N/mm² or more, more preferably 14 N/mm² or more, and still more preferably 20 N/mm² or more. The upper limit of the adhesion strength may be, for example, 100 N/mm² or less, 90 N/mm² or less, or 80 N/mm² or less.

As described above, the cured product of the resin composition according to the present embodiment has been cured by reacting the resins such as the components (A) to (C) to form binds. Therefore, the cured product may contain components included in the resin composition or reaction products of them. This cured product can have a low absorbance at the communication wavelength normally used in a silicon photonics. For example, by conducting the procedure described in the section <Test 5. Measurement test of absorbance of cured product of the resin composition> in [Examples] to be described later, the absorbance of the cured product is measured with a light path length of 2 mm at a wavelength of 1310 nm. In this case, the absorbance can be preferably 0.10 or less, more preferably 0.09 or less, still more preferably 0.08 or less, and especially preferably 0.06 or less.

### <Device using the resin composition as the adhesive>

The resin composition according to the present embodiment can be used as the adhesive in the method for adhering the optical fiber to the groove of the silicon chip. By using the resin composition as the adhesive, a device including the silicon chip and the optical fiber that is adhered to the groove of the silicon chip can be obtained. Hereinafter, this device may be referred to as "optical device".

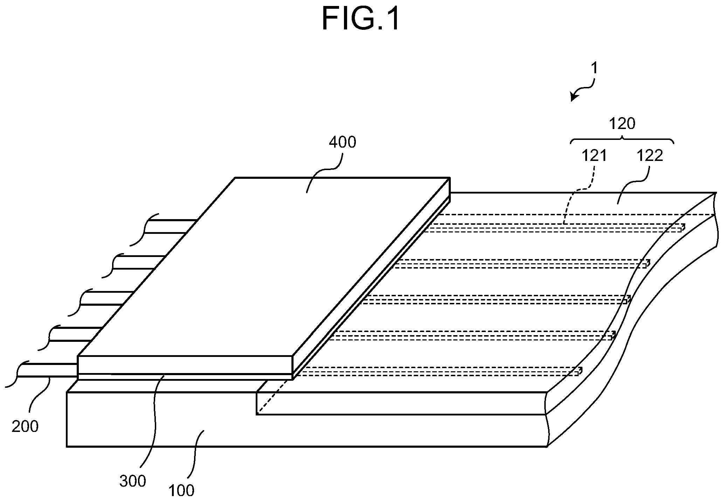

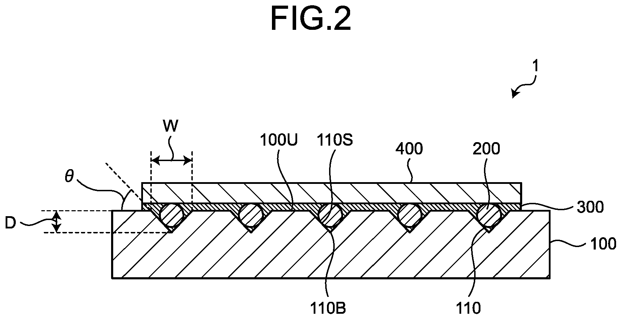

Fig. 1 is a schematic perspective view of an optical device 1 according to one embodiment of the present invention. Fig. 2 is a cross-sectional view schematically illustrating the optical device 1 according to one embodiment of the present invention. Fig. 2 illustrates a schematic cross-section of the optical device 1 that is cut in a plane perpendicular to a direction in which a groove 110 of a silicon chip 100 extends.

As illustrated in Fig. 1 and Fig. 2, the optical device 1 according to the present embodiment includes the silicon chip 100, an optical fiber 200, and an adhesion portion 300 that adheres the silicon chip 100 and the optical fiber 200. The optical device 1 may include, as needed, a lid member 400 that covers the optical fiber 200 and the adhesion portion 300.

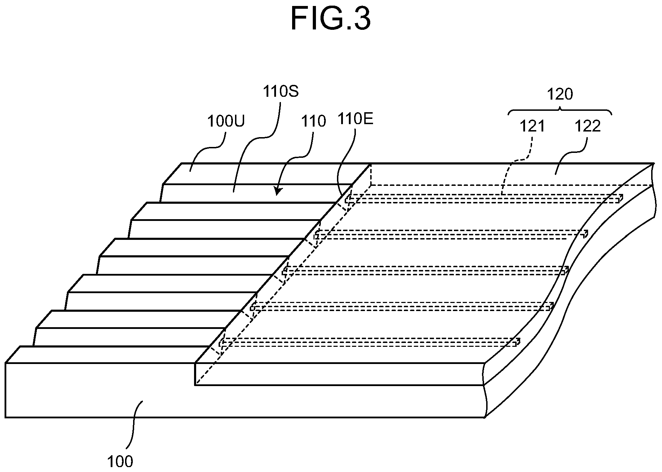

Fig. 3 is a schematic perspective view of the silicon chip 100 included in the optical device 1 according to one embodiment of the present invention. The silicon chip 100 includes an optical waveguide 120 that is formed in such a way that it is optically connectable to the optical fiber 200. Here, the explanation will be made, as an example, about the optical waveguide 120 including a core 121 that is formed of silicon and a cladding 122 that is formed of SiO₂ to cover this core 121, but the optical waveguide 120 is not limited to this. On the silicon chip 100, the groove 110 for mounting the optical fiber 200 that will be connected to this optical waveguide 120 is formed.

The groove 110 is usually formed while extending in one direction. Here, as an example of the groove 110, the explanation will be made about the V-shaped groove having side faces 110S with an approximately V-shaped cross-section as illustrated in Fig. 2; however, the groove 110 is not limited to the V-shaped groove. For example, besides the V-shaped groove having a cross-sectional shape with an edge at a bottom 110B, the groove 110 may be a groove having a rounded cross-sectional shape at the bottom or a flat bottom (e.g., a U-shaped groove). Normally, the groove 110 is formed such that the optical connection can be achieved between the optical fiber 200 and the core 121 of the optical waveguide 120 at an end portion 110E in the side of the optical waveguide 120 of the groove 110, as illustrated in Fig. 3.

It is preferable that the specific cross-sectional shape and size of the groove 110 is set such that the optical fiber 200 can be aligned in the groove 110. For this, the resin composition according to the present embodiment has the advantage of a high viscosity, which allows a uniform application. From the viewpoint of utilizing this advantage, the resin composition of the present embodiment is suitable for the use to connect the optical fiber 200 to the fine groove 110, which requires a highly precise uniformity. Therefore, from the viewpoint of utilizing the advantage of the resin composition according to the present embodiment, it is preferable that a width W of the groove 110 is narrow as illustrated in Fig. 2; thus, the specific range thereof is preferably 0.30 mm or less, more preferably 0.20 mm or less, and is preferably 0.01 mm or more, more preferably 0.10 mm or more. It is preferable that a depth D of the groove 110 is shallow; thus, the specific range thereof is preferably 0.30 mm or less, more preferably 0.20 mm or less, and still more preferably 0.15 mm or less, and is preferably 0.01 mm or more, more preferably 0.10 mm or more. It is preferable that an angle θ formed by the side face 110S of the groove 110 with a chip main surface 100U is small; thus, the specific range thereof is preferably 70° or less, more preferably 60° or less, and still more preferably 55° or less, and is preferably 20° or more, more preferably 30° or more, and still more preferably 40° or more.

As illustrated in Fig. 2, the optical fibers 200 are aligned in the grooves 110. The adhesion portion 300 fills around the optical fiber 200 to adhere the optical fiber 200 to the groove 110. The adhesion portion 300 includes the cured product of the resin composition, and usually includes only the cured product. Because the cured product exhibits a superior adhesion strength, it is possible that the adhesion portion 300 enables the optical fiber 200 to be stably held in the groove 110. The tip of the optical fiber 200 (not illustrated in the drawings) may be placed in contact with the end portion 110E of the groove 110, or it may be placed away from the end portion 110E of the groove 110. In the case that the tip of the optical fiber 200 and the end portion 110E of the groove 110 are apart, the gap between the tip of the optical fiber 200 and the end portion 110E of the groove 110 may be filled with the adhesion portion 300; in this case the absorbance of the adhesion portion 300 formed by the cured product of the resin composition of the present embodiment at communication wavelengths is so low that attenuation of the optical signal is suppressed.

Usually, on the groove 110, the lid member 400 is put to cover the optical fiber 200 and the adhesion portion 300. When the lid member 400 is put on, the adhesion portion 300 is formed in the gap between the silicon chip 100 and the lid member 400, thereby giving the configuration that the optical fiber 200 is fixed in the adhesion portion 300. With this, the lid member 400 can protect the optical fiber 200 and the adhesion portion 300. In addition, because the resin composition of the present embodiment does not have an excessive fluidity on the silicon chip 100, preferably it prevents the adhesion portion 300 from being formed in an unintended portion. Specifically, it is possible to suppress the adhesion portion 300 from being formed at the portion where it sticks out from the lid member 400 viewed from the thickness direction.

The optical device 1 as described above can be produced, for example, by a production method that includes:
a step (I) of placing an optical fiber 200 in a groove 110 of a silicon chip 100;
a step (II) of applying a resin composition onto the groove 110; and
a step (IV) of curing the resin composition to form an adhesion portion 300. In the case that the optical device 1 including a lid member 400 is produced, the production method thereof may further include
a step (III) of placing the lid member 400 on the resin composition having been applied onto the groove 110.

In the production method of the optical device 1, it does not matter whether the step (I) of placing the optical fiber 200 in the groove 110 of the silicon chip 100 is conducted earlier or the step (II) of applying the resin composition to the groove 110 is conducted earlier. Therefore, the step (I) may be conducted after the step (II), but it is preferable to conduct the step (II) after the step (I). The application of the resin composition may be performed by an appropriate application equipment such as a dispenser.

In the case that the lid member 400 is placed, the production method of the optical device 1 is carried out in such a way that the step (III) of placing the lid member 400 on the resin composition is conducted after the step (I) and the step (II). It is preferable that the lid member 400 is placed such that it covers the entire resin composition having been applied onto the groove 110. The resin composition may spread to fill the space between the silicon chip 100 having the grooves 110 formed and the lid member 400. Because the resin composition does not flow excessively, preferably sticking out of the lid member 400 seeing from a thickness direction is suppressed.

Then, the step (IV) of curing the resin composition is carried out. At the step (IV), the resin composition is exposed to an active light that is able to cure the resin composition. There is no particular restriction in the active light as long as the light is able to cure the resin composition. Usually, an ultraviolet light is used. Irradiation of the active light may be conducted through the silicon chip 100 or through the lid member 400.

Because curing of the resin composition can proceed even with a small exposure amount to achieve the adhesion between the silicon chip 100 and the optical fiber 200, the exposure amount at the step (IV) can be reduced. For example, in the case of exposure with an ultraviolet light, the range of the exposure amount is preferably 3000 mJ/cm² or less, more preferably 2500 mJ/cm² or less, and still more preferably 2000 mJ/cm² or less. There is no restriction in the lower limit of the exposure amount as long as the desired adhesion strength can be obtained; thus, this may be, for example, 100 mJ/cm² or more. Because the resin composition can be cured with such a small exposure amount to form the adhesion portion 300 having a sufficient adhesion strength, the time for producing the optical device 1 can be shortened.

By forming the adhesion portion 300 at the step (IV), the adhesion of the optical fiber 200 to the groove 110 of the silicon chip 100 is achieved to obtain the optical device 1. The production method of the optical device 1 may further include an optional step in combination with the steps (I) to (IV).

For example, the production method of the optical device 1 may include, after the step (IV), an annealing step at which the optical device 1 is heated. At the annealing step, the optical device 1 is heated, for example, at 120°C or higher. However, from the viewpoint of utilizing the advantage of shortening the production time of the optical device 1, it is preferable that the production method of the optical device 1 does not include the annealing step.

### [Examples]

Hereinafter, the present invention will be described specifically by means of Examples. However, the present invention is not limited to these Examples. In the description hereunder, "part" and "%" representing quantities mean "part by mass" and "% by mass", respectively, unless otherwise specifically mentioned. The temperature and pressure conditions were room temperature (23°C) and atmospheric pressure (1 atm), respectively, unless otherwise specifically mentioned.

### description of Reagents>

The reagents used in Examples and Comparative Examples to be described hereafter are as follows. All the viscosities are the values obtained at 25°C.
(A) Aliphatic oxetane compound:
   - "OXT-221": "OXT-221" manufactured by Toagosei Co., Ltd; viscosity of 9 mPa·s to 14 mPa·s
(B) Solid aliphatic epoxy resin:
   - "YX8040": Hydrogenated bisphenol A epoxy resin; "YX8040" manufactured by Mitsubishi Chemical Corp.; epoxy equivalent of 1000 g/eq.
   - "EHPE3150": Alicyclic epoxy resin containing a cyclohexane ring; "EHPE3150" manufactured by Daicel Corp.; epoxy equivalent of 177 g/eq.
   - "HP-7200": Alicyclic epoxy resin containing a dicyclopentadiene skeleton; "HP-7200" manufactured by DIC Corp.; epoxy equivalent of 254 g/eq. to 264 g/eq.
(C) Liquid aliphatic epoxy resin:
   - "YX8000D": Hydrogenated bisphenol A epoxy resin; "YX8000D" manufactured by Mitsubishi Chemical Corp.; epoxy equivalent of 185 g/eq. and viscosity of 0.8 Pa·s.
   - "2021P": Alicyclic epoxy resin containing a cyclohexane ring; "Celoxide 2021P" manufactured by Daicel Corp.; epoxy equivalent of 130 g/eq. and viscosity of 240 mPa·s.
   - "EP-4088L": Alicyclic epoxy resin containing a dicyclopentadiene skeleton; "EP-4088L" manufactured by ADEKA Corp.; epoxy equivalent of 165 g/eq. and viscosity of 230 mPa·s.
(D) Photocationic polymerization initiator
   - "CPI-110P": Diphenyl[4-(phenylthio)phenyl]sulfonium hexafluorophosphate; "CPI-110P" manufactured by San-Apro Ltd.
   - "CPI-110B": Diphenyl[4-(phenylthio)phenyl]sulfonium tetra(pentafluorophenyl)borate; "CPI-110B" manufactured by San-Apro Ltd.
   - "CPI-310FG": Sulfonium salt; "CPI-310FG" manufactured by San-Apro Ltd.
(E) Inorganic particle:
   - "Silica particle 1": Spherical silica ("SO-C2" manufactured by Admatechs Co., Ltd.; average particle diameter of 0.5 µm and specific surface area of 5.8 m²/g), whose surface is treated with a silane coupling agent ("KBM-403" manufactured by Shin-Etsu Chemical Co., Ltd.))
   - "Silica particle 2": Fumed silica ("200" manufactured by Nippon Aerosil Co., Ltd.; specific surface area of 200 m²/g)
(F) Photosensitizer:
   - "UVS-1101": "Anthracure UVS-1101"; 9,10-diethoxyanthracene, manufactured by Air Water Performance Chemicals Inc.

### <Example 1>

Into a plastic container specially designed for a rotation/revolution mixer ("Awatori Rentaro ARE-310" manufactured by Thinky Corp.), 30 parts of the aliphatic oxetane compound ("OXT-221" manufacture by Toagosei Co., Ltd.), 60 parts of the solid aliphatic epoxy resin ("YX8040" manufactured by Mitsubishi Chemical Corp.), and 10 parts of the liquid aliphatic epoxy resin ("YX8000D" manufactured by Mitsubishi Chemical Corp.) were weighed to obtain an intermediate mixture. The resulting intermediate mixture was mixed using the above-mentioned rotation/revolution mixer at 2000 rpm until the solid aliphatic epoxy resin was completely dissolved. Then, to this intermediate mixture, 1 part of the photocationic polymerization initiator ("CPI-110P" manufactured by San-Apro Ltd.) and 0.5 parts of the photosensitizer ("Anthracure UVS-1101" manufactured by Air Water Performance Chemicals Inc.) were added; the resulting mixture was again agitated using the rotation/revolution mixer to obtain a resin composition 1.

### <Example 2>

A resin composition 2 was produced in the same way as Example 1, except that 10 parts of the liquid aliphatic epoxy resin ("YX8000D" manufactured by Mitsubishi Chemical Corp.) was replaced by 10 parts of the liquid aliphatic epoxy resin ("Celoxide 2021P" manufacture by Daicel Corp.).

### <Example 3>

A resin composition 3 was produced in the same way as Example 1, except that 60 parts of the solid aliphatic epoxy resin ("YX8040" manufactured by Mitsubishi Chemical Corp.) was replaced by 60 parts of the solid aliphatic epoxy resin ("EHPE3150" manufactured by Daicel Corp.).

### <Example 4>

A resin composition 4 was produced in the same way as Example 1, except that 60 parts of the solid aliphatic epoxy resin ("YX8040" manufactured by Mitsubishi Chemical Corp.) was replaced by 60 parts of the solid aliphatic epoxy resin ("EHPE3150" manufacture by Daicel Corp), and that 10 parts of the liquid aliphatic epoxy resin ("YX8000D" manufactured by Mitsubishi Chemical Corp.) was replaced by 10 parts of the liquid aliphatic epoxy resin ("Celoxide 2021P" manufacture by Daicel Corp.).

### <Example 5>

The amount of the solid aliphatic epoxy resin ("YX8040" manufactured by Mitsubishi Chemical Corp.) was changed to 30 parts. In addition, 30 parts of the solid aliphatic epoxy resin ("EHPE3150" manufactured by Daicel Corp.) was added to the intermediate mixture. The amount of the liquid aliphatic epoxy resin ("YX8000D" manufactured by Mitsubishi Chemical Corp.) was changed to 5 parts. In addition, 5 parts of the liquid aliphatic epoxy resin ("Celoxide 2021P" manufactured by Daicel Corp.) was added to the intermediate mixture. A resin composition 5 was produced in the same way as Example 1 except for the above-mentioned matters.

### <Example 6>

A resin composition 6 was produced in the same way as Example 1, except that 60 parts of the solid aliphatic epoxy resin ("YX8040" manufactured by Mitsubishi Chemical Corp.) was replaced by 60 parts of the solid aliphatic epoxy resin ("HP-7200" manufactured by DIC Corp.), and that 10 parts of the liquid aliphatic epoxy resin ("YX8000D" manufactured by Mitsubishi Chemical Corp.) was replaced by 10 parts of the liquid aliphatic epoxy resin ("EP-4088L" manufactured by ADEKA Corp.).

### <Example 7>

The amount of the aliphatic oxetane compound ("OXT-221" manufacture by Toagosei Co., Ltd.) was changed to 25 parts. The amount of the solid aliphatic epoxy resin ("YX8040" manufactured by Mitsubishi Chemical Corp.) was changed to 65 parts. The amount of the liquid aliphatic epoxy resin ("YX8000D" manufactured by Mitsubishi Chemical Corp.) was changed to 5 parts. In addition, 5 parts of the liquid aliphatic epoxy resin ("Celoxide 2021P" manufactured by Daicel Corp.) was added to the intermediate mixture. A resin composition 7 was produced in the same way as Example 1 except for the above-mentioned matters.

### <Example 8>

The amount of the aliphatic oxetane compound ("OXT-221" manufacture by Toagosei Co., Ltd.) was changed to 35 parts. The amount of the liquid aliphatic epoxy resin ("YX8000D" manufactured by Mitsubishi Chemical Corp.) was changed to 2.5 parts. In addition, 2.5 parts of the liquid aliphatic epoxy resin ("Celoxide 2021P" manufactured by Daicel Corp.) was added to the intermediate mixture. A resin composition 8 was produced in the same way as Example 1 except for the above-mentioned matters.

### <Example 9>

The amount of the solid aliphatic epoxy resin ("YX8040" manufactured by Mitsubishi Chemical Corp.) was changed to 55 parts. The amount of the liquid aliphatic epoxy resin ("YX8000D" manufactured by Mitsubishi Chemical Corp.) was changed to 7.5 parts. In addition, 7.5 parts of the liquid aliphatic epoxy resin ("Celoxide 2021P" manufactured by Daicel Corp.) was added to the intermediate mixture. A resin composition 9 was produced in the same way as Example 1 except for the above-mentioned matters.

### <Example 10>

The amount of the aliphatic oxetane compound ("OXT-221" manufacture by Toagosei Co., Ltd.) was changed to 15 parts. The amount of the solid aliphatic epoxy resin ("YX8040" manufactured by Mitsubishi Chemical Corp.) was changed to 75 parts. The amount of the liquid aliphatic epoxy resin ("YX8000D" manufactured by Mitsubishi Chemical Corp.) was changed to 5 parts. In addition, 5 parts of the liquid aliphatic epoxy resin ("Celoxide 2021P" manufactured by Daicel Corp.) was added to the intermediate mixture. A resin composition 10 was produced in the same way as Example 1 except for the above-mentioned matters.

### <Example 11>

The amount of the aliphatic oxetane compound ("OXT-221" manufacture by Toagosei Co., Ltd.) was changed to 45 parts. The amount of the solid aliphatic epoxy resin ("YX8040" manufactured by Mitsubishi Chemical Corp.) was changed to 52 parts. The amount of the liquid aliphatic epoxy resin ("YX8000D" manufactured by Mitsubishi Chemical Corp.) was changed to 1.5 parts. In addition, 1.5 parts of the liquid aliphatic epoxy resin ("Celoxide 2021P" manufactured by Daicel Corp.) was added to the intermediate mixture. A resin composition 11 was produced in the same way as Example 1 except for the above-mentioned matters.

### <Example 12>

A resin composition 12 was produced in the same way as Example 1, except that the amount of the solid aliphatic epoxy resin ("YX8040" manufactured by Mitsubishi Chemical Corp.) was changed to 45 parts, and that the amount of the liquid aliphatic epoxy resin ("YX8000D" manufactured by Mitsubishi Chemical Corp.) was changed to 25 parts.

### <Example 13>

A resin composition 13 was produced in the same way as Example 1, except that before the photocationic polymerization initiator ("CPI-110P" manufactured by San-Apro Ltd.) and the photosensitizer ("Anthracure UVS-1101" manufactured by Air Water Performance Chemicals Inc.) were mixed, 10 parts of the silica particle 1 was added to the intermediate mixture.

### <Example 14>

A resin composition 14 was produced in the same way as Example 1, except that the amount of the photocationic polymerization initiator ("CPI-110P" manufactured by San-Apro Ltd.) was changed to 2.5 parts, and that the amount of the photosensitizer ("Anthracure UVS-1101" manufactured by Air Water Performance Chemicals Inc.) was changed to 2.5 parts.

### <Example 15>

A resin composition 15 was produced in the same way as Example 1, except that the amount of the photocationic polymerization initiator ("CPI-110P" manufactured by San-Apro Ltd.) was changed to 0.5 parts.

### <Example 16>

A resin composition 16 was produced in the same way as Example 1, except that the amount of the photocationic polymerization initiator ("CPI-110P" manufactured by San-Apro Ltd.) was changed to 0.2 parts, and that the amount of the photosensitizer ("Anthracure UVS-1101" manufactured by Air Water Performance Chemicals Inc.) was changed to 0.2 parts.

### <Example 17>

A resin composition 17 was produced in the same way as Example 1, except that the amount of the photocationic polymerization initiator ("CPI-110P" manufactured by San-Apro Ltd.) was changed to 4 parts, and that the amount of the photosensitizer ("Anthracure UVS-1101" manufactured by Air Water Performance Chemicals Inc.) was changed to 4 parts.

### <Example 18>

A resin composition 18 was produced in the same way as Example 1, except that the amount of the photocationic polymerization initiator ("CPI-110P" manufactured by San-Apro Ltd.) was changed to 0.5 parts, and that 0.5 parts of the photocationic polymerization initiator ("CPI-110B" manufactured by San-Apro Ltd.) was further added to the intermediate mixture.

### <Example 19>

A resin composition 19 was produced in the same way as Example 1, except that before the photocationic polymerization initiator ("CPI-110P" manufactured by San-Apro Ltd.) and the photosensitizer ("Anthracure UVS-1101" manufactured by Air Water Performance Chemicals Inc.) were mixed, 10 parts of the silica particle 2 was added to the intermediate mixture.

### <Example 20>

A resin composition 20 was produced in the same way as Example 1, except that 1 part of the photocationic polymerization initiator ("CPI-110P" manufactured by San-Apro Ltd.) was replaced by 1 part of the photocationic polymerization initiator ("CPI-310FG" manufactured by San-Apro Ltd.).

### <Comparative Example 1>

A resin composition 18 was produced in the same way as Example 1, except that the aliphatic oxetane compound ("OXT-221" manufacture by Toagosei Co., Ltd.) was not used, and that the amount of the solid aliphatic epoxy resin ("YX8040" manufactured by Mitsubishi Chemical Corp.) was changed to 90 parts.

### <Comparative Example 2>

A resin composition 19 was produced in the same way as Example 1, except that the solid aliphatic epoxy resin ("YX8040" manufactured by Mitsubishi Chemical Corp.) was not used, and that the amount of the liquid aliphatic epoxy resin ("YX8000D" manufactured by Mitsubishi Chemical Corp.) was changed to 70 parts.

### <Comparative Example 3>

A resin composition 20 was produced in the same way as Example 1, except that the amount of the solid aliphatic epoxy resin ("YX8040" manufactured by Mitsubishi Chemical Corp.) was changed to 70 parts, and that the liquid aliphatic epoxy resin ("YX8000D" manufactured by Mitsubishi Chemical Corp.) was not used.

### <Comparative Example 4>

Ten parts of the liquid aliphatic epoxy resin ("YX8000D" manufactured by Mitsubishi Chemical Corp.) was replaced by 10 parts of the liquid aliphatic epoxy resin ("EP-4088L" manufactured by ADEKA Corp.). Before the photocationic polymerization initiator ("CPI-110P" manufactured by San-Apro Ltd.) and the photosensitizer ("Anthracure UVS-1101" manufactured by Air Water Performance Chemicals Inc.) were mixed, 20 parts of the silica particle 1 was added to the intermediate mixture. A resin composition 21 was produced in the same way as Example 1 except for the above-mentioned matters.

### <Test 1. Measurement test of adhesion strength>

A 76 mm × 26 mm × thickness of 1.0 mm glass slide plate was prepared. Onto this glass slide plate, 1 mg to 3 mg of the resin composition was applied, and then a silicon capacitor chip (2012 size by JIS designation) was placed on top of it. The resin composition was cured by a photocuring under curing conditions 1 to 3 as described later. The die shear strength as the adhesion strength was measured by scratching a capacitor chip on the cured resin composition at a rate of 200 µm/s and 25°C using a die shear measurement instrument (4000 Series manufactured by Nordson DAGE Inc.). The die shear strength is the amount of the force required to peel off the capacitor chip when the force is applied to the capacitor chip in the in-plane direction (that is, a direction perpendicular to the thickness direction). The higher this die shear strength is, the higher the adhesion strength is.

### (Curing condition 1)

Using a UV irradiation device ("NF-150" manufactured by Ushio Inc.), an ultraviolet light with an illuminance of 33 mW/cm² was irradiated to the resin composition through a glass slide plate for 60 seconds (exposure amount of 2000 mJ/cm²). Hereinafter, the adhesion strength of the cured product obtained by curing the resin composition under this curing condition 1 may be referred to as "adhesion strength 1".

### (Curing condition 2)

Using the UV irradiation device ("NF-150" manufactured by Ushio Inc.), an ultraviolet light with an illuminance of 33 mW/cm² was irradiated to the resin composition through a glass slide plate for 15 seconds (exposure amount of 500 mJ/cm²). Hereinafter, the adhesion strength of the cured product obtained by curing the resin composition under this curing condition 2 may be referred to as "adhesion strength 2".

### (Curing condition 3)

Using the UV irradiation device ("NF-150" manufactured by Ushio Inc.), an ultraviolet light with an illuminance of 33 mW/cm² was irradiated to the resin composition through a glass slide plate for 3 seconds (exposure amount of 100 mJ/cm²). Hereinafter, the adhesion strength of the cured product obtained by curing the resin composition under this curing condition 3 may be referred to as "adhesion strength 3".

### <Test 2. Viscosity measurement test>

The viscosity of the resin composition was measured using an E-type viscometer ("RE-80U", 1°34' × R24 cone, manufactured by Toki Sangyo Co., Ltd.) at 25°C.

### <Test 3. Test for adhesion between groove and optical fiber>

A silicon chip having the V-shaped grooves formed ("VGC-8-250-10.4-3.8-1" manufactured by OZ Optics Ltd.) was prepared. The size of the silicon chip was 10.4 mm long, 3.8 mm wide, and 1 mm thick, having eight V-shaped grooves for placing optical fibers with a pitch of 250 µm. The size of each V-shaped groove was 0.195±0.005 mm wide, 0.138±0.005 mm deep, 5.3 mm long, and the angle formed between the side face of the V-shaped groove and the chip main surface was 54.74°.

An 8-channel single-mode ribbon fiber was placed on the silicon chip such that the tips of the optical fibers of the ribbon fiber were placed on the V-shaped grooves of the silicon chip. By using a dispenser, 20 mg of the resin composition was applied onto the V-shaped grooves. On the resulting coated resin composition, a lid for the V-shaped groove chip ("VGC-LID-5.38-1" manufactured by OZ Optics Ltd.) was placed. An ultraviolet light with an illuminance of 33 mW/cm² was irradiated through the lid for the V-shaped groove chip to cure the resin composition. Immediately after the resin composition was cured, a 1-gram weight was placed on the optical fibers. When the weight was placed on it, if the optical fibers did not peel off from the V-shaped grooves of the silicon chip, it was judged as "Passed"; if the optical fibers peeled off, it was judged as "Failed".

The operation described above was conducted with an ultraviolet irradiation time of 60 seconds (exposure amount of 2000 mJ/cm²), of 15 seconds (exposure amount of 500 mJ/cm²), and of 3 seconds (exposure amount of 100 mJ/cm²), each, to judge whether the product passed or failed the test. From the judgement results, the exposure amount required to adhere the optical fiber to the V-shaped groove of the silicon chip was evaluated according to the following criteria.
"Excellent": Passed with an exposure amount of 100 mJ/cm² or more
"Good": Passed with an exposure amount of 500 mJ/cm² or more
"Acceptable": Passed with an exposure amount of 2000 mJ/cm² or more
"Unacceptable": Failed with an exposure amount of 2000 mJ/cm²

### <Test 4. Appearance evaluation test>

The appearance after adhering the optical fiber to the V-shaped groove was evaluated based on the following criteria by observing the sample prepared with an ultraviolet irradiation time of 60 seconds (exposure amount of 2000 mJ/cm²) in Test 3 described above.

"Excellent": The optical fibers are adhered to the V-shaped grooves without sticking out of the resin composition or the cured product thereof from the lid of the V-shaped groove chip.

"Acceptable": The optical fibers are adhered to the V-shaped grooves with sticking out of the resin composition or the cured product thereof from the lid of the V-shaped groove chip.

"Unacceptable": The optical fibers cannot be adhered to the V-shaped grooves, and the V-shaped grooves and the optical fibers are separated.

### <Test 5. Measurement test of absorbance of cured product of the resin composition>

A 2 mm-thick silicone rubber frame was put on a mold-releasing polyethylene terephthalate film ("AL-5" manufactured by Lintec Corp.), and then the resin composition was poured into the frame. A mold-releasing polyethylene terephthalate film ("AL-5" manufactured by Lintec Corp.) was placed on it, and then, the resin composition was irradiated with an ultraviolet light with a luminance of 33 mW/cm² for 60 seconds (exposure amount of 2000 mJ/cm²) using a UV irradiation device ("NF-150" manufactured by Ushio Inc.). The frame and polyethylene terephthalate films were removed to obtain the cured product of the resin composition. The absorbance of the cured product was measured in the thickness direction of the resulting cured product at a measurement wavelength of 1310 nm using a spectrophotometer ("V-770" manufactured by JASCO Corp.).

### <Results>

The results of Examples and Comparative Examples are summarized in Tables below. In the tables below, the abbreviations have the following meanings.
"Content of (A)": Amount of the component (A) relative to 100 parts by mass of the total amount of the components (A) to (C)
"Content of (B)": Amount of the component (B) relative to 100 parts by mass of the total amount of the components (A) to (C)
"Content of (C)": Amount of the component (C) relative to 100 parts by mass of the total amount of the components (A) to (C)
"Content of (D)": Amount of the component (D) relative to 100 parts by mass of the total amount of the components (A) to (C)
"Content of (F)": Amount of the component (F) relative to 100 parts by mass of the total amount of the components (A) to (C)
"Content of (E)": Amount of the component (E) relative to total 100% by mass of the resin composition

[Table 1]

**[Table 1. Results of Examples 1 to 7]**

| | | Example | | | | | | |
|---|---|---|---|---|---|---|---|---|
| | | 1 | 2 | 3 | 4 | 5 | 6 | 7 |
| (A) | OXT-221 | 30 | 30 | 30 | 30 | 30 | 30 | 25 |
| (B) | YX8040 | 60 | 60 | | | 30 | | 65 |
| | EHPE3150 | | | 60 | 60 | 30 | | |
| | HP-7200 | | | | | | 60 | |
| (C) | YX8000D | 10 | | 10 | | 5 | | 5 |
| | 2021P | | 10 | | 10 | 5 | | 5 |
| | EP-4088L | | | | | | 10 | |
| (D) | CPI-110P | 1 | 1 | 1 | 1 | 1 | 1 | 1 |
| | CPI-110B | | | | | | | |
| | CPI-310FG | | | | | | | |
| (E) | Silica particle 1 | | | | | | | |
| | Silica particle 2 | | | | | | | |
| (F) | UVS-1101 | 0.5 | 0.5 | 0.5 | 0.5 | 0.5 | 0.5 | 0.5 |
| Content | Content of (A) [parts] | 30 | 30 | 30 | 30 | 30 | 30 | 25 |
| | Content of (B) [parts] | 60 | 60 | 60 | 60 | 60 | 60 | 65 |
| | Content of (C) [parts] | 10 | 10 | 10 | 10 | 10 | 10 | 10 |
| | Content of (D) [parts] | 1 | 1 | 1 | 1 | 1 | 1 | 1 |
| | Content of (F) [parts] | 0.5 | 0.5 | 0.5 | 0.5 | 0.5 | 0.5 | 0.5 |
| Content | Content of (E) [% bv mass] | 0 | 0 | 0 | 0 | 0 | 0 | 0 |
| Test 1 | Adhesion strength 1 [N/mm²] (2000mJ/cm²) | 44 | 50 | 55 | 68 | 48 | 18 | 50 |
| | Adhesion strength 2 [N/mm²] (500mJ/cm²) | 44 | 50 | 55 | 66 | 40 | 8 | 48 |
| | Adhesion strength 3 [N/mm²] (100mJ/cm²) | 28 | 25 | 23 | 24 | 26 | 3 | 34 |
| Test 2 | Viscosity [Pa·s] | 99 | 60 | 70 | 40 | 72 | 108 | 123 |
| Test 3 | Exposure amount for adhesion | Excellent | Excellent | Excellent | Excellent | Excellent | Acceptable | Excellent |
| Test 4 | Appearance | Excelent | Excelent | Excelent | Excelent | Excelent | Excelent | Excelent |
| Test 5 | Absorbance | 0.044 | 0.042 | 0.043 | 0.045 | 0.047 | 0.052 | 0.048 |

[Table 2]

**[Table 2. Results of Examples 8 to 14]**

| | | Example | | | | | | |
|---|---|---|---|---|---|---|---|---|
| | | 8 | 9 | 10 | 11 | 12 | 13 | 14 |
| (A) | OXT-221 | 35 | 30 | 15 | 45 | 30 | 30 | 30 |
| (B) | YX8040 | 60 | 55 | 75 | 52 | 45 | 60 | 60 |
| | EHPE3150 | | | | | | | |
| | HP-7200 | | | | | | | |
| (C) | YX8000D | 2.5 | 7.5 | 5 | 1.5 | 25 | 10 | 10 |
| | 2021P | 2.5 | 7.5 | 5 | 1.5 | | | |
| | EP-4088L | | | | | | | |
| (D) | CPI-110P | 1 | 1 | 1 | 1 | 1 | 1 | 2.5 |
| | CPI-110B | | | | | | | |
| | CPI-310FG | | | | | | | |
| (E) | Silica particle 1 | | | | | | 10 | |
| | Silica particle 2 | | | | | | | |
| (F) | UVS-1101 | 0.5 | 0.5 | 0.5 | 0.5 | 0.5 | 0.5 | 2.5 |
| Content | Content of (A) [parts] | 35 | 30 | 15 | 45 | 30 | 30 | 30 |
| | Content of (B) [parts] | 60 | 55 | 75 | 52 | 45 | 60 | 60 |
| | Content of (C) [parts] | 5 | 15 | 10 | 3 | 25 | 10 | 10 |
| | Content of (D) [parts] | 1 | 1 | 1 | 1 | 1 | 1 | 2.5 |
| | Content of (F) [parts] | 0.5 | 0.5 | 0.5 | 0.5 | 0.5 | 0.5 | 1 |
| Content | Content of (E) [% by mass] | 0 | 0 | 0 | 0 | 0 | 8.9 | 0 |
| Test 1 | Adhesion strength 1 [N/mm²] (2000mJ/cm²) | 53 | 56 | 42 | 45 | 44 | 15 | 43 |
| | Adhesion strength 2 [N/mm²] (500mJ/cm²) | 50 | 55 | 37 | 16 | 23 | 10 | 44 |
| | Adhesion strength 3 [N/mm²] (100mJ/cm²) | 23 | 26 | 8 | 9 | 3 | 2 | 32 |
| Test 2 | Viscosity [Pa·s] | 36 | 22 | 123 | 9 | 5 | 130 | 100 |
| Test 3 | Exposure amount for adhesion | Excellent | Excellent | good | good | good | Acceptable | Excellent |
| Test 4 | Appearance | Excelent | Excelent | Excelent | Acceptable | Acceptable | Acceptable | Excelent |
| Test 5 | Absorbance | 0.049 | 0.044 | 0.045 | 0.048 | 0.043 | 0.095 | 0.048 |

[Table 3]

**[Table 3. Results of Examples 15 to 20]**

| | | Example | | | | | |
|---|---|---|---|---|---|---|---|
| | | 15 | 16 | 17 | 18 | 19 | 20 |
| (A) | OXT-221 | 30 | 30 | 30 | 30 | 30 | 30 |
| (B) | YX8040 | 60 | 60 | 60 | 60 | 60 | 60 |
| | EHPE3150 | | | | | | |
| | HP-7200 | | | | | | |
| (C) | YX8000D | 10 | 10 | 10 | 10 | 10 | 10 |
| | 2021P | | | | | | |
| | EP-4088L | | | | | | |
| (D) | CPI-110P | 0.5 | 0.2 | 4 | 0.5 | 1 | |
| | CPI-110B | | | | 0.5 | | |
| | CPI-310FG | | | | | | 1 |
| (E) | Silica particle 1 | | | | | | |
| | Silica particle 2 | | | | | 10 | |
| (F) | UVS-1101 | 0.5 | 0.2 | 4 | 0.5 | 0.5 | 0.5 |
| Content | Content of (A) [parts] | 30 | 30 | 30 | 30 | 30 | 30 |
| | Content of (B) [parts] | 60 | 60 | 60 | 60 | 60 | 60 |
| | Content of (C) [parts] | 10 | 10 | 10 | 10 | 10 | 10 |
| | Content of (D) [parts] | 0.5 | 0.2 | 4 | 1 | 1 | 1 |
| | Content of (F) [parts] | 0.5 | 0.2 | 4 | 0.5 | 0.5 | 0.5 |
| Content | Content of (E) [% by mass] | 0 | 0 | 0 | 0 | 8.9 | 0 |
| Test 1 | Adhesion strength 1 [N/mm²] (2000mJ/cm²) | 41 | 18 | 45 | 44 | 18 | 55 |
| | Adhesion strength 2 [N/mm²] (500mJ/cm²) | 41 | 7 | 37 | 43 | 13 | 54 |
| | Adhesion strength 3 [N/mm²] (100mJ/cm²) | 25 | 2 | 38 | 40 | 5 | 54 |
| Test 2 | Viscosity [Pa·s] | 99 | 96 | 100 | 60 | 200 | 100 |
| Test 3 | Exposure amount for adhesion | Excellent | Acceptable | Excellent | Excellent | Acceptable | Excellent |
| Test 4 | Appearance | Excelent | Acceptable | Excelent | Excelent | Acceptable | Excelent |
| Test 5 | Absorbance | 0.041 | 0.04 | 0.055 | 0.043 | 0.053 | 0.043 |

**[Table 4]**

| Table 4. Results of Comparative Examples 1 to 4] | | | | | |
|---|---|---|---|---|---|
| | | Comparative Example | | | |
| | | 1 | 2 | 3 | 4 |
| (A) | OXT-221 | | 30 | 30 | 30 |
| (B) | YX8040 | 90 | | 70 | 60 |
| | EHPE3150 | | | | |
| | HP-7200 | | | | |
| (C) | YX8000D | 10 | 70 | | |
| | 2021P | | | | |
| | EP-4088L | | | | 10 |
| (D) | CPI-110P | 1 | 1 | 1 | 1 |
| | CPI-110B | | | | |
| | CPI-310FG | | | | |
| (E) | Silica particle 1 | | | | 20 |
| | Silica particle 2 | | | | |
| (F) | UVS-1101 | 0.5 | 0.5 | 0.5 | 0.5 |
| Content | Content of (A) [parts] | 0 | 30 | 30 | 30 |
| | Content of (B) [parts] | 90 | 0 | 70 | 60 |
| | Content of (C) [parts] | 10 | 70 | 0 | 10 |
| | Content of (D) [parts] | 1 | 1 | 1 | 1 |
| | Content of (F) [parts] | 0.5 | 0.5 | 0.5 | 0.5 |
| Content | Content of (E) [% by mass] | 0 | 0 | 0 | 16.40% |
| Test 1 | Adhesion strength 1 [N/mm²] (2000mJ/cm²) | 8 | 5 | 7 | 0 |
| | Adhesion strength 2 [N/mm²] (500mJ/cm²) | 0 | 0 | 0 | 0 |
| | Adhesion strength 3 [N/mm²] (100mJ/cm²) | 0 | 0 | 0 | 0 |
| Test 2 | Viscosity [Pa·s] | 135 | 0.5 | 56 | 68 |
| Test 3 | Exposure amount for adhesion | Unacceptable | Unacceptable | Unacceptable | Unacceptable |
| Test 4 | Appearance | Unacceptable | Unacceptable | Unacceptable | Unacceptable |
| Test 5 | Absorbance | 0.042 | 0.045 | 0.055 | 0.16 |

### Reference Signs List

- 1: optical device
- 100: silicon chip
- 100U: main surface of silicon chip
- 110: groove
- 110B: bottom of groove
- 110E: end portion of groove
- 110S: side face of groove
- 120: optical waveguide
- 121: core
- 122: cladding
- 200: optical fiber
- 300: adhesion portion
- 400: lid member

## Claims

1. A resin composition for adhering an optical fiber to a groove of a silicon chip, the resin composition comprising:
(A) a liquid aliphatic oxetane resin;
(B) a solid aliphatic epoxy resin;
(C) a liquid aliphatic epoxy resin; and
(D) a photocationic polymerization initiator, wherein
the resin composition contains or does not contain (E) an inorganic particle, and
an amount of (E) the inorganic particle is 15% by mass or less relative to total 100% by mass of the resin composition.

2. The resin composition according to claim 1, wherein an amount of (A) the liquid aliphatic oxetane resin is 10 parts by mass or more and 50 parts by mass or less relative to 100 parts by mass of a total amount of (A) the liquid aliphatic oxetane resin, (B) the solid aliphatic epoxy resin, and (C) the liquid aliphatic epoxy resin .

3. The resin composition according to claims 1 or 2, wherein an amount of (B) the solid aliphatic epoxy resin is 40 parts by mass or more and 80 parts by mass or less relative to 100 parts by mass of a total amount of (A) the liquid aliphatic oxetane resin, (B) the solid aliphatic epoxy resin, and (C) the liquid aliphatic epoxy resin .

4. The resin composition according to any one of claims 1 to 3, wherein an amount of (C) the liquid aliphatic epoxy resin is 1 part by mass or more and 30 parts by mass or less relative to 100 parts by mass of a total amount of (A) the liquid aliphatic oxetane resin, (B) the solid aliphatic epoxy resin, and (C) the liquid aliphatic epoxy resin.

5. The resin composition according to any one of claims 1 to 4, wherein an amount of (D) the photocationic polymerization initiator is 0.1 parts by mass or more and 5 parts by mass or less relative to 100 parts by mass of a total amount of (A) the liquid aliphatic oxetane resin, (B) the solid aliphatic epoxy resin, and (C) the liquid aliphatic epoxy resin.

6. The resin composition according to any one of claims 1 to 5, wherein (B) the solid aliphatic epoxy resin comprises one or more resins selected from the group consisting of a hydrogenated bisphenol A epoxy resin and an aliphatic epoxy resin containing a 6-membered ring.

7. The resin composition according to any one of claims 1 to 6, wherein (C) the liquid aliphatic epoxy resin comprises one or more resins selected from the group consisting of a hydrogenated bisphenol A epoxy resin and an aliphatic epoxy resin containing a 6-membered ring.

8. The resin composition according to any one of claims 1 to 7, wherein an amount of (E) the inorganic particle is 0.1% by mass or less relative to total 100% by mass of the resin composition.

9. A method for producing a device, the method comprising:
a step of placing an optical fiber in a groove of a silicon chip;
a step of applying the resin composition according to any one of claims 1 to 8 onto the groove; and
a step of curing the resin composition.

10. A device comprising:
a silicon chip having a groove formed therein;
an optical fiber placed in the groove of the silicon chip; and
an adhesion portion at which the optical fiber is adhered to the groove, wherein
the adhesion portion comprises a cured product of the resin composition according to any one of claims 1 to 8.
